# EUROPÄISCHE PATENTSCHRIFT

(11) **EP 3 443 705 B1**
(45) Veröffentlichungstag und Bekanntmachung des Hinweises auf die Patenterteilung: **10.03.2021**
(21) Anmeldenummer: 17712963.2
(22) Anmeldetag: 22.03.2017
(51) Int. Cl.: H04L 9/08, H04L 9/32

(54) **VERFAHREN UND ANORDNUNG ZUM AUFBAUEN EINER SICHEREN KOMMUNIKATION ZWISCHEN EINER ERSTEN NETZWERKEINRICHTUNG (INITIATOR) UND EINER ZWEITEN NETZWERKEINRICHTUNG (RESPONDER)**
METHOD AND ASSEMBLY FOR ESTABLISHING A SECURE COMMUNICATION BETWEEN A FIRST NETWORK DEVICE (INITIATOR) AND A SECOND NETWORK DEVICE (RESPONDER)
PROCÉDÉ ET DISPOSITIF D'ÉTABLISSEMENT D'UNE COMMUNICATION SÉCURISÉE ENTRE UN PREMIER DISPOSITIF DE RÉSEAU (INITIATEUR) ET UN DEUXIÈME DISPOSITIF DE RÉSEAU (RÉPONDANT)

(30) Priorität: 11.04.2016 LU 93024
(43) Veröffentlichungstag der Anmeldung: 20.02.2019
(73) Patentinhaber: Phoenix Contact GmbH & Co. KG, 32825 Blomberg (DE)
(72) Erfinder: NITSCHKE, Torsten, 32657 Lemgo (DE)
(74) Vertreter: Blumbach · Zinngrebe Patentanwälte PartG mbB
(86) Internationale Anmeldenummer: PCT/EP2017/056769
(87) Internationale Veröffentlichungsnummer: WO 2017/178201

(56) Entgegenhaltungen:
- US-A1- 2014 223 182
- P Menezes ET AL: "This is a Chapter from the Handbook of Applied Cryptography, by A Key Establishment Protocols", , 31. Dezember 1997 (1997-12-31), XP055119322, Gefunden im Internet: URL:http://cacr.uwaterloo.ca/hac/about/cha p12.pdf [gefunden am 2014-05-21]

## Beschreibung

Die Erfindung betrifft ein Verfahren zur sicheren Kommunikation zwischen einer ersten Netzwerkeinrichtung (Initiator) und einer zweiten Netzwerkeinrichtung (Responder) in einem Kommunikationsnetzwerk und eine hierfür geeignete Anordnung von Netzwerkeinrichtungen, insbesondere zwischen als eingebettete Systeme ausgebildete Netzwerkeinrichtungen.

In der nachfolgenden Beschreibung und den angehängten Ansprüchen werden als Netzwerkeinrichtungen Geräte bezeichnet, welche sowohl eigenständig als auch von einem Benutzer veranlasst über mindestens ein Netzwerk mit anderen Geräten kommunizieren, zuzüglich Softwarekomponenten, welche mittels Laufzeitumgebung Zugang zu mindestens einem Netzwerk haben und darüber eigenständig als auch von einem Benutzer veranlasst mit anderen Einrichtungen kommunizieren.

Bekanntermaßen ist in bestimmten Fällen die Kommunikation zwischen Netzwerkeinrichtungen sicher zu führen, zum Beispiel um die Integrität, Vertraulichkeit und/oder Verfügbarkeit der Kommunikation zu gewährleisten.

Die Integrität der Kommunikation ist zum Beispiel aufgrund von störenden Einflüssen gefährdet, welche Kommunikationsinhalte verfälschen, oder durch einen aktiven Angriff, bei dem ein Dritter Kommunikationsinhalte zu seinem Vorteil verändert, unterdrückt und/oder hinzufügt.

Die Vertraulichkeit der Kommunikation ist zum Beispiel gefährdet, wenn Kommunikationsinhalte versehentlich an den falschen Adressaten übermittelt werden oder ein Angreifer Kommunikationsinhalte in Erfahrung bringen kann.

Die Verfügbarkeit ist beispielsweise dann gefährdet, wenn versehentlich oder absichtlich Kommunikationsressourcen durch Netzwerkeinrichtungen in Anspruch genommen werden, mit denen keine Kommunikation beabsichtigt oder erwünscht ist, so dass für die Kommunikation mit den beabsichtigten oder erwünschten Netzwerkeinrichtungen zu wenig Ressourcen übrig sind. Ressourcen können beispielsweise Speicherplatz oder Rechengeschwindigkeit sein, wobei insbesondere eingebettete Systeme häufig in ihren Ressourcen beschränkt sind.

So bezeichnet eine als eingebettetes System ausgebildete Netzwerkeinrichtung eine in einen technischen Kontext eingebundene (eingebettete) Netzwerkeinrichtung, die aufgrund dessen typischerweise stark einschränkenden Randbedingungen unterliegt und nur stark reduzierte Ressourcen besitzt.

Zur Sicherung der Kommunikation existiert mannigfaltiger Stand der Technik. Üblicherweise weisen sich Kommunikationspartner beim Verbindungsaufbau einander ihre Identität nach und authentisieren sich gegenseitig, d.h. sie übergeben Informationen, die eine Verifizierung der Identität durch den jeweils anderen Kommunikationspartner erlaubt, wobei daraufhin eben dieser jeweils andere Kommunikationspartner überprüft, ob die vorgegebene Identität durch die Authentisierungsdaten bestätigt werden kann, d.h. eine Authentifizierung durchführt. Ferner erzeugen die Kommunikationspartner vor der Authentisierung/Authentifizierung, währenddessen oder darauf aufbauend in der Regel temporäre gemeinsame Geheimnisse und verwenden solche Geheimnisse für die Absicherung von Nachrichten. Die temporären gemeinsamen Geheimnisse dienen zum Authentisieren/Authentifizieren und/oder zum Verschlüsseln der nach der Authentisierung/Authentifizierung ausgetauschten Nachrichten.

Dabei können die als Kommunikationspartner agierenden Netzwerkeinrichtungen üblicherweise sowohl ihre eigene Identität mittels eigener Geheimnisse als auch alternativ oder ergänzend die Identität ihres Benutzers auf dessen Veranlassung zusammen mit dessen Geheimnissen zur Authentisierung/Authentifizierung verwenden.

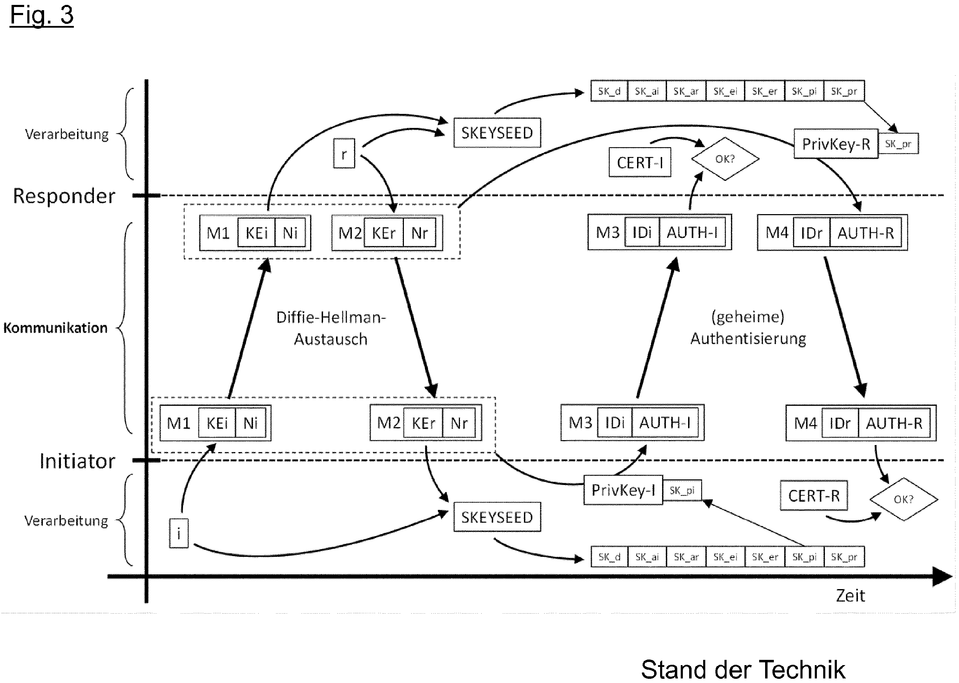

Der IETF (Internet Engineering Task Force)-Standard beschreibt z.B. ein Verfahren ("RFC 5996 Internet Key Exchange Protocol Version 2", C. Kaufmann, P. Hoffmann, Y. Nir and P. Eronen; The Internet Engineering Task Force (IETF), 2010), welches mit der Abkürzung IKEv2 bezeichnet wird. Mit Bezug auf die beigefügte Fig. 3, welche ein grundsätzliches Schema zum Kommunikationsaufbau nach IKEv2 zeigt, erzeugen bei diesem Verfahren zwei als Kommunikationspartner agierende Netzwerkeinrichtungen beim Aufbau einer Kommunikation zunächst ein erstes temporäres gemeinsames Geheimnis namens SKEYSEED mittels eines sogenannten Diffie-Hellmann-Schlüsselaustausches. Eine der Netzwerkeinrichtungen, in Fig. 3 als Initiator bezeichnet, initiiert hierbei die Kommunikation und die andere, in Fig. 3 als Responder bezeichnet, erwidert auf diese Initiierung.

SKEYSEED wird dann mittels zu bekannten Identitäten gehörenden, dauerhaften Geheimnissen PrivKey-I, PrivKey-R authentisiert, indem sich die Kommunikationspartner gegenseitig Signaturen AUTH-I, AUTH-R zu den für den Diffie-Hellmann-Schlüsselaustausch ausgetauschten Nachrichten zusenden, wobei die Signaturen mit Hilfe der dauerhaften Geheimnisse erzeugt und vom jeweils anderen Kommunikationspartner mittels Prüfkriterien CERT-I, CERT-R verifiziert, d.h. authentifiziert werden. Dabei und nachfolgend leiten beide Kommunikationspartner jeweils aus SKEYSEED ein zweites temporäres gemeinsames Geheimnis ab, welches als Komposition von mehreren kryptographischen Schlüsseln verwendet wird (beispielsweise SK_d, SK_ai, SK_ar, SK_ei, SK_er, SK_pi, SK_pr), von denen einige zur Authentisierung/Authentifizierung und einige zur Verschlüsselung bestimmter weiterer Nachrichten verwendet werden. Je Kommunikationsrichtung kommen unterschiedliche Schlüssel zur Anwendung. Optional wird nachfolgend von jedem Kommunikationspartner aus einem Teil des zweiten gemeinsamen Geheimnisses SK_d ein drittes temporäres gemeinsames Geheimnis abgeleitet (KEYMAT genannt; in Fig. 3 aus Übersichtsgründen nicht enthalten), das eine Komposition aus mehreren kryptographischen Schlüsseln darstellt (beispielsweise aus Schlüsseln namens SK2_ei, SK2_ai, SK2_er, und SK2_ar). Die Ableitung des zweiten und dritten temporären gemeinsamen Geheimnisses geschieht gemäß solchen Algorithmen, wie sie zu Anfang des Kommunikationsaufbaus vereinbart wurden.

Eine Übersicht der in Fig. 3 enthaltenen Bezugszeichen ist in der nachfolgenden Liste aufgeführt.
- i:: Geheime vom Initiator gewählte Zufallszahl;
- M1:: Erste Nachricht, enthaltend:
- KEi:: Vom Initiator erzeugte Schlüsselaustauschdaten,
- Ni:: Vom Initiator gewählte Zufallszahl zur einmaligen Verwendung;

- r:: Geheime vom Responder gewählte Zufallszahl;
- M2:: Zweite Nachricht, enthaltend:
- KEr:: Vom Responder erzeugte Schlüsselaustauschdaten,
- Nr:: Vom Initiator gewählte Zufallszahl zur einmaligen Verwendung;

- SKEYSEED:: erstes temporäres gemeinsames Geheimnis - Größe zum Berechnen des zweiten temporären gemeinsamen Geheimnisses, enthaltend: mehrere Geheimnisse/Schlüssel, enthaltend:
SK_d: Geheimer Schlüssel zur Ableitung von weiteren Schlüsseln,
SK_ai: Geheimer Schlüssel zum Authentisieren/Authentifizieren von durch den Initiator gesendeten Nachrichten,
SK_ar: Geheimer Schlüssel zum Authentisieren/Authentifizieren von durch den Responder gesendeten Nachrichten,
SK_ei: Geheimer Schlüssel zum Verschlüsseln von durch den Initiator gesendeten Nachrichten,
SK_er: Geheimer Schlüssel zum Verschlüsseln von durch den Responder gesendeten Nachrichten,
SK_pi: Geheimer Schlüssel zum Initialisieren eines Pseudozufallszahlengenerators zur Verwendung durch den Initiator,
SK_pr: Geheimer Schlüssel zum Initialisieren eines Pseudozufallszahlengenerators zur Verwendung durch den Responder;

- PrivKey-I:: Privater Schlüssel des Initiators (dauerhaftes Geheimnis);
- CERT-I:: Zertifikat zur Identität des Initiators - enthält den öffentlichen Schlüssel des Initiators;
- PrivKey-R:: Privater Schlüssel des Responders (dauerhaftes Geheimnis);
- CERT-R:: Zertifikat zur Identität des Responders - enthält den öffentlichen Schlüssel des Responders;

- M3:: Dritte Nachricht;
- IDi:: Identität des Initiators;
- AUTH-I:: Daten, mit denen sich der Initiator authentisiert;

- M4:: Vierte Nachricht;
- IDr:: Identität des Responders;
- AUTH-R:: Daten, mit denen sich der Responder authentisiert.

Dauerhafte Geheimnisse werden hier als dauerhaft bezeichnet, weil sie üblicherweise für mehrere Verbindungsaufbauten verwendet werden und selten gewechselt werden, während die temporären Geheimnisse nur kurzfristig verwendet werden, zum Beispiel nicht länger als für eine Kommunikationsbeziehung. Beispielsweise erklärt der entsprechende, vorerwähnte IETF-Standard explizit, dass die erzeugten temporären Geheimnisse bei verschiedenen Kommunikationsprotokollen nur für eine bestimmte Dauer und Menge an Daten angewendet werden dürfen und danach neue temporäre Geheimnisse verwendet werden müssen.

Der Beginn des Kommunikationsaufbaus nach IKEv2 erfordert jedoch für den dort stattfindenden Diffie-Hellmann-Schlüsselaustausch Berechnungen, wie z.B. Exponentiationen, mit großen Ganzzahlen, deren Speicherung üblicherweise jeweils wesentlich mehr Bits erfordert als in das Register eines üblichen Prozessors passen. Damit bedarf es für IKEv2 während des Beginns des Verbindungsaufbaus zwangsweise relativ hoher Ressourcen an Hauptspeicher und Rechenzeit, die insbesondere bei eingebetteten Systemen knapp ist. Für Echtzeitsysteme (d.h. Systeme zur unmittelbaren Steuerung und Abwicklung von Prozessen, bei denen ein jeweiliges Ergebnis innerhalb eines vorher fest definierten Zeitintervalls garantiert vorliegen muss) ist ferner der Bedarf an Rechenzeit problematisch, weil hier üblicherweise kurze Reaktionszeiten erforderlich sind. Industrielle Steuerungen sind in der Regel eingebettete Echtzeitsysteme mit eingeschränkten Ressourcen und kurzer Reaktionszeit.

Insbesondere bei kleinen eingebetteten Systemen mit sehr geringen Ressourcen ist es besonders nachteilig, dass eben ganz am Anfang des Kommunikationsaufbaus, wenn noch keine Identitäten bekannt sind, der ressourcenmäßig anspruchsvolle Diffie-Hellmann-Schlüsselaustausch stattzufinden hat. Dieser muss durchgeführt werden, bevor anhand der nachfolgend ausgetauschten Identität die Netzwerkeinrichtungen feststellen können, ob der Verbindungsaufbau mit der jeweils anderen Netzwerkeinrichtung erwünscht, beziehungsweise beabsichtigt ist. Der verzögerte Austausch der Identitäten nach dem IKEv2-Prinzip eröffnet zwar die Möglichkeit, die Identitäten mit bereits vorhandenen gemeinsamen temporären Schlüsseln verschlüsselt und damit einigermaßen vertraulich zu übertragen. Bei sehr geringen Ressourcen überwiegt allerdings der Nachteil, dass versehentlich oder absichtlich irgendwelche Netzwerkeinrichtungen den Beginn des Kommunikationsaufbaus veranlassen können und damit besonders leicht hohe Ressourcenbelegung auf einem eingebetteten Gerät erzeugen, ohne dafür berechtigt zu sein und ohne dafür leicht von unerwünschten Netzwerkeinrichtungen unterschieden werden zu können.

In der Patentschrift DE 10 2012 220 990 B3 wird ein Verfahren und eine Anordnung offenbart, bei denen zwei Netzwerkeinrichtungen mittels mehrerer Schritte ein drittes gemeinsames Geheimnis KE, KA zur sicheren Kommunikation erzeugen. Mit Bezugnahme auf die beigefügte Fig. 4, welche ein grundsätzliches Schema zum Kommunikationsaufbau gemäß DE 10 2012 220 990 B3 zeigt, wird hierbei vorab in beiden Netzwerkeinrichtungen ein erstes gemeinsames Geheimnis GS sowie ein erster Algorithmus und ein zweiter Algorithmus gespeichert. Zur Einrichtung einer sicheren Kommunikation zwischen den beiden Netzwerkeinrichtungen sendet dann die eine Netzwerkeinrichtung "Initiator" in einer ersten Nachricht M1 ein erstes Datum SD, z.B. deren Seriennummer, an die andere Netzwerkeinrichtung "Responder". Beide Netzwerkeinrichtungen erzeugen daraufhin ein zweites Geheimnis PS aus dem ersten Datum SD unter Verwendung des ersten gemeinsamen Geheimnisses GS und des ersten Algorithmus. Die andere Netzwerkeinrichtung sendet daraufhin in einer zweiten Nachricht M2 ein zweites Datum R, z.B. eine Zufallszahl, an die eine Netzwerkeinrichtung. Daraus errechnen beide Netzwerkeinrichtungen das dritte gemeinsame Geheimnis KE, KA unter Verwendung des zweiten gemeinsamen Geheimnisses PS und des zweiten Algorithmus. Das dritte gemeinsame Geheimnis KE, KA wird dann zur Absicherung der nachfolgenden Kommunikation verwendet, zum Beispiel zu deren Authentisierung/Authentifizierung und/oder Verschlüsselung.

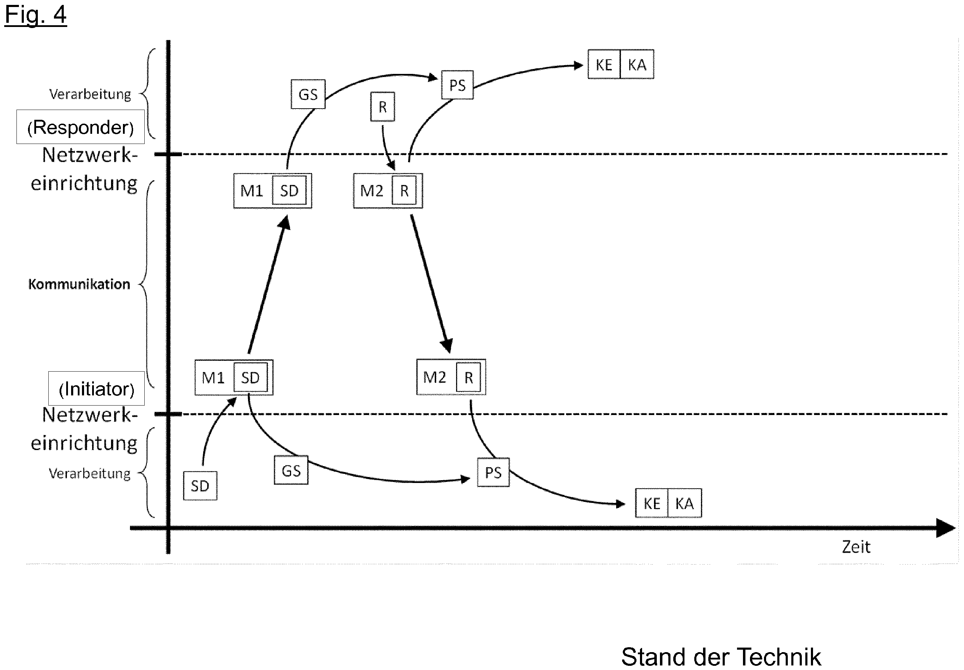

Eine Übersicht der in Fig. 4 enthaltenen Bezugszeichen ist in der nachfolgenden Liste aufgeführt.
- SD:: Erstes Datum;
- M1:: Erste Nachricht;
- GS:: Erstes gemeinsames Geheimnis;
- R:: Zweites Datum;
- M2:: Zweite Nachricht;
- PS:: Zweites gemeinsames Geheimnis;
- KE, KA:: Drittes gemeinsames Geheimnis.

Eine Authentisierung/Authentifizierung der Netzwerkeinrichtungen entsteht somit erst während der sicheren Kommunikation implizit durch das Verwenden des korrekten dritten Geheimnisses KE, KA. Denn wüsste eine der beiden Netzwerkeinrichtungen das erste gemeinsame Geheimnis GS nicht, so würde mit von der Güte der Algorithmen abhängiger Wahrscheinlichkeit kein drittes gemeinsames Geheimnis KE, KA entstehen, sondern die Netzwerkeinrichtungen hätten als Ergebnis hierfür unterschiedliche Werte. Als Folge davon können die nachfolgend ausgetauschten und mittels einer der Varianten des dritten gemeinsamen Geheimnisses KE, KA gesicherten Nachrichten nur mit der Variante des dritten gemeinsamen Geheimnisses authentifiziert und/oder entschlüsselt werden, mit der sie auch signiert und/oder verschlüsselt wurden. Ohne drittes gemeinsames Geheimnis bestünde also keine sichere Kommunikation je nach Kommunikationsprotokoll eventuell sogar gar keine weitere Kommunikationsmöglichkeit.

Ferner ist es bei diesem Verfahren zumindest sehr aufwendig, zwei Fehlerfälle zu unterscheiden, wenn tatsächlich unterschiedliche dritte gemeinsame Geheimnisse entstanden sind. So ist es fraglich, ob solche unterschiedlichen dritten gemeinsamen Geheimnisse aufgrund einer Verwechslung erzeugt worden sind oder ob die für deren Berechnung ausgetauschten Nachrichten bei der Übertragung versehentlich, zum Beispiel durch Störungen, oder absichtlich, zum Beispiel durch Dritte, verändert wurden.

Verwechslungen können zum Beispiel leicht entstehen, wenn versehentlich eine falsche Produktionszelle beim Verbindungsaufbau mit einer Netzwerkeinrichtung angesprochen wurde, die Produktionszellen aber gleich aufgebaut und parametriert sind, wie es beim Serienmaschinenbau üblich ist. Hier würden sich Netzwerkeinrichtungen ggf. nur durch das vorab gespeicherte erste gemeinsame Geheimnis unterscheiden.

Weiter ist an diesem Verfahren nachteilig, dass von beiden Netzwerkeinrichtungen zunächst alle Schritte des Verfahrens abgearbeitet werden müssen, bevor anhand eines nicht übereinstimmenden dritten Geheimnisses Fehler festgestellt werden können. Während des Verbindungsaufbaus sind demnach Ressourcen für sämtliche der Schritte und Algorithmen in Verwendung, die entsprechend nicht für andere Verbindungsaufbauten zur Verfügung stehen.

Als weiterer Stand der Technik beschreibt das sogenannte Transport Layer Security Protocol, abgekürzt als TLS-Protokoll oder auch TLS, wie es in der Version 1.2 erklärt ist (z.B. in "RFC 5246 The Transport Layer Security (TLS) Protocol Version 1.2", T. Dierks und E. Rescorla; The Internet Engineering Task Force, 2008), zusammengefasst zwei verschiedene Verfahren für die gegenseitige Authentisierung/Authentifizierung.

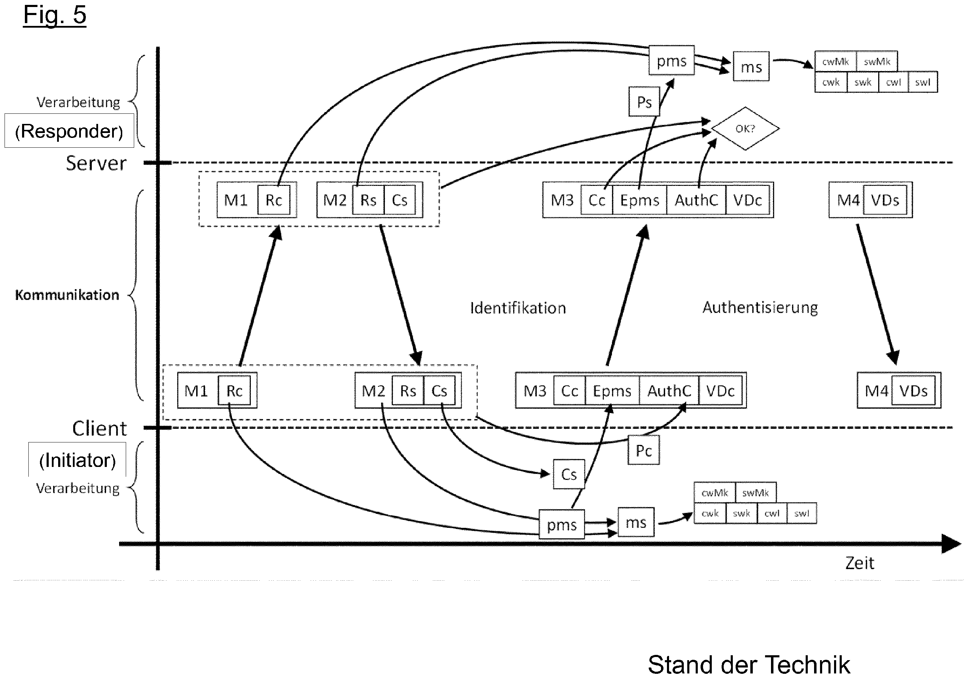

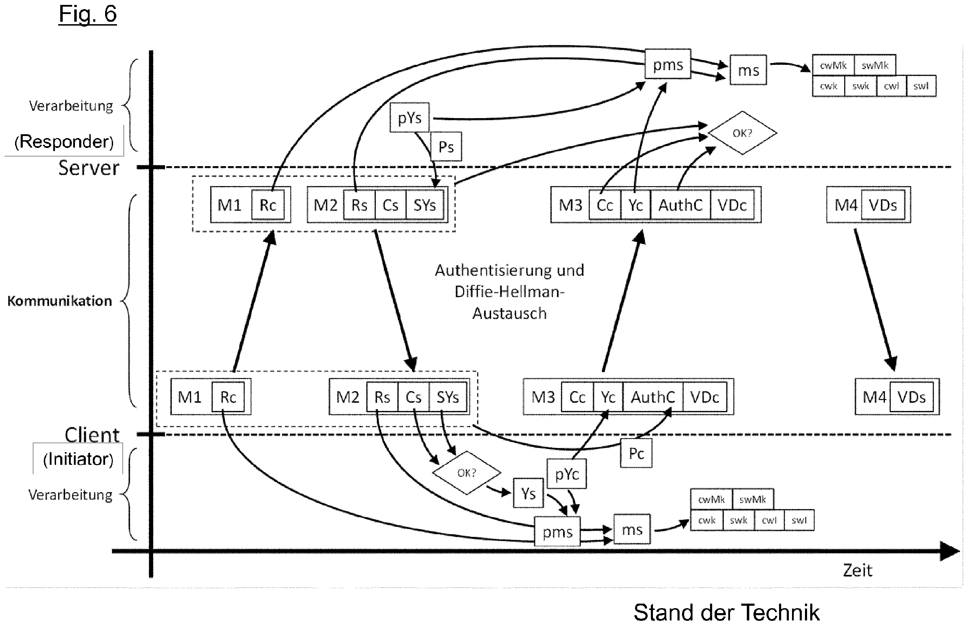

Bei diesen beiden TLS-Verfahren für die gegenseitige Authentisierung/Authentifizierung ist bei beiden Kommunikationspartnern, hier Client und Server genannt, vorab ein asymmetrisches Schlüsselpaar gespeichert, bestehend aus einem jeweils Individuellen privaten Schlüssel, d.h. Bezug nehmend auf Fig. 5 und 6, Pc für den Client bzw. Ps für den Server, und einem dazu passenden, öffentlichen Schlüssel in einem Zertifikat, d.h. Bezug nehmend auf Fig. 5 und 6 z.B. das Zertifikat Cc für den Client bzw. das Zertifikat Cs für den Server, wobei das Zertifikat auch die jeweilige Identität nennt.

Bei dem ersten dieser Verfahren gemäß Fig. 5, welche ein grundsätzliches Schema zum Kommunikationsaufbau gemäß TLS ohne Diffie-Hellman zeigt, tauschen die Kommunikationspartner zunächst von Ihnen erzeugte Zufallszahlen Rc bzw. Rs (Rc vom Client und Rs vom Server) und die Identitäten samt der zugehörigen öffentlichen Schlüssel in Form der Zertifikate Cc und Cs aus. Der die Verbindung initiierende Kommunikationspartner, der Client, authentisiert sich mit Hilfe einer asymmetrischen Signatur AuthC über die bisher ausgetauschten Daten Rc, Rs, Cs, welche er mit seinem privaten Schlüssel erzeugt und welche der andere Kommunikationspartner, der Server, mit dem zusammen mit dieser asymmetrischen Signatur AuthC übermittelten öffentlichen Schlüssel Cc prüft (authentifiziert). Daneben erzeugt der Client aus weiteren Zufallswerten ein erstes gemeinsames Geheimnis ("premaster secret"), bei Fig. 5 abgekürzt als pms, welches er dem anderen Kommunikationspartner als verschlüsselten Wert übermittelt, der bei Fig. 5 als Epms bezeichnet ist. Die Verschlüsselung von pms zu Epms erfolgt mit dem öffentlichen Schlüssel aus dem Zertifikat Cs des Servers. Implizit wird damit die Identität des Servers authentisiert/authentifiziert, weil nur er mit seinem privaten Schlüssel Ps in der Lage ist, den korrekten Wert von pms zu entschlüsseln und folgend ein richtiges zweites gemeinsames Geheimnis "master secret", bei Fig. 5 abgekürzt als ms zu bestimmen. Denn aus der Kombination von pms und den während der vorhergehenden Kommunikation ausgetauschten Zufallszahlen Rc und Rs erzeugen beide Kommunikationspartner dann unabhängig voneinander das zweite gemeinsame Geheimnis ms mit Hilfe von Algorithmen, die in der vorhergehenden Kommunikation ausgehandelt wurden. Aus ms leiten Client und Server ein drittes gemeinsames Geheimnis ab, welches als eine Kombination aus kryptographischen Schlüsseln (cwMk, swMk, cwk, swk, cwl, swl) zur Authentisierung/Authentifizierung und/oder Verschlüsselung der nachfolgenden Kommunikation dient. Bei dieser Authentisierung/Authentifizierung und/oder Verschlüsselung und bei der Ableitung des dritten gemeinsamen Geheimnisses kommen ebenfalls Algorithmen zur Anwendung, wie sie anfangs beim Austausch der Identitäten verhandelt wurden.

Eine Übersicht der in Fig. 5 enthaltenen Bezugszeichen ist in der nachfolgenden Liste aufgeführt.
- Ps:: Privater Schlüssel des Servers;
- Pc:: Privater Schlüssel des Clients;
- M1:: Erste Nachricht;
- Rc:: Vom Client erzeugte Zufallszahl;
- M2:: Zweite Nachricht;
- Rs:: Vom Server erzeugte Zufallszahl;
- Cs:: Zertifikat des Servers;

- pms:: Erstes gemeinsames Geheimnis;

- M3:: Dritte Nachricht;
- Cc:: Zertifikat des Clients;
- Epms:: Verschlüsseltes erstes gemeinsames Geheimnis;
- AuthC:: Daten, mit denen sich der Client authentisiert;
- VDc:: Durch Client gesendete Verifikationsdaten;

- ms:: Zweites gemeinsames Geheimnis;

- M4:: Vierte Nachricht;
- VDs:: Durch den Server gesendete Verifikationsdaten;

- cwMk:: (client write MAC key) -Bestandteil des dritten gemeinsamen Geheimnisses;
- swMk:: (server write MAC key) -Bestandteil des dritten gemeinsamen Geheimnisses;
- cwk:: (client write key) -Bestandteil des dritten gemeinsamen Geheimnisses;
- swk:: (server write key) -Bestandteil des dritten gemeinsamen Geheimnisses;
- cwl:: (client write initialization vector) -Bestandteil des dritten gemeinsamen Geheimnisses;
- swl:: (server write initialization vector) - Bestandteil des dritten gemeinsamen Geheimnisses.

Vorteilhaft beim diesem Verfahren nach TLS ist zwar, dass die Identitäten zu Beginn des Verfahrens ausgetauscht werden, bevor nennenswert Rechenzeit und Ressourcen verbraucht wurden. Durch Versehen irregeleitete Kommunikationspartner können also mit geringem Ressourcenaufwand abgelehnt werden.

Nachteilig für die Schutzwirkung bei diesem Verfahren nach TLS ist allerdings insbesondere, dass es allein von der Vertrauenswürdigkeit des Clients abhängt, dass das erste gemeinsame Geheimnis pms wirklich ein Geheimnis ist. Denn allein der Client bestimmt den Wert von pms. Deshalb wird das Verfahren nur noch selten angewendet.

Bei dem zweiten dieser Verfahren gemäß Fig. 6, welche ein grundsätzliches Schema zum Kommunikationsaufbau gemäß TLS mit Diffie-Hellman zeigt, tauschen ebenfalls Client und Server Zufallszahlen Rc und Rs sowie die Zertifikate Cs und Cc aus. Zusammen mit dem Zertifikat Cs übermittelt der Server auch einen Wert Ys für den Diffie-Hellmann-Schlüsselaustausch, welchen er aus dem Wert pYs ableitet, welchen er vorher erzeugt und den er komplett geheim hält. Zur Übermittlung ergänzt er den abgeleiteten Wert Ys um eine Signatur. Die Kombination aus Ys und der Signatur wird bei Fig. 6 als SYs bezeichnet. Die Signatur erstellt der Server mit Hilfe seines privaten Schlüssels Ps. Sie wird vom Client mit Hilfe des Zertifikates Cs verifiziert, so dass dadurch die Identität des Servers gegenüber dem Client authentisiert/authentifiziert ist und der Client über den authentifizierten Wert Ys verfügt. Der Client generiert ebenfalls einen nur ihm bekannten Wert pYc und erzeugt daraus einen zweiten Wert Yc für den Diffie-Hellman-Austausch. Ferner leitet er aus pYc und Ys direkt das erste gemeinsame Geheimnis pms ab. Zusammen mit seinem Zertifikat Cc übermittelt der Client den Wert Yc unverschlüsselt zum Server, zusammen mit einer Signatur AuthC über alle vorher ausgetauschten Nachrichten. Diese Signatur erstellt der Client mit Hilfe seines privaten Schlüssels Pc und diese prüft der Server mit Hilfe des Zertifikates Cc. Nach dem Empfang von Yc generiert auch der Server das erste gemeinsame Geheimnis pms aus der Kombination von pYs und Yc. Sowohl der Client als auch der Server berechnen aus pms in Kombination mit den vorher ausgetauschten Zufallszahlen Rc und Rs das zweite gemeinsame Geheimnis ms und leiten daraus das dritte gemeinsame Geheimnis ab, welches als eine Kombination aus kryptographischen Schlüsseln (cwMk, swMk, cwk, swk, cwl, swl) zur Authentisierung/Authentifizierung und/oder Verschlüsselung der nachfolgenden Kommunikation dient. Bei der Schlüsselaushandlung nach Diffie-Hellmann kommen bei der Generierung des ersten, zweiten und dritten gemeinsamen Geheimnisses und bei der nachfolgenden Anwendung der kryptographischen Schlüssel Algorithmen zur Anwendung, die während des Kommunikationsaufbaus von Client und Server ausgehandelt wurden.

Eine Übersicht der in Fig. 6 enthaltenen Bezugszeichen ist in der nachfolgenden Liste aufgeführt.
- Ps:: Privater Schlüssel des Servers;
- Pc:: Privater Schlüssel des Clients;

- M1:: Erste Nachricht;
- Rc:: Vom Client erzeugte Zufallszahl;

- pYs:: Geheimer Anfangswert des Servers für den Diffie-Hellmann-Schlüsselaustausch;
- Ys:: Abgeleiteter öffentlicher Anfangswert des Servers für den Diffie-Hellmann-Schlüsselaustausch;

- M2:: Zweite Nachricht;
- Rs:: Vom Server erzeugte Zufallszahl;
- Cs:: Zertifikat des Servers;
- SYs:: Abgeleiteter öffentlicher Anfangswert des Servers für den Diffie-Hellmann-Schlüsselaustausch in Kombination mit einer Signatur des Servers;
- pYc:: Geheimer Anfangswert des Clients für den Diffie-Hellmann-Schlüsselaustausch;

- M3:: Dritte Nachricht;
- Cc:: Zertifikat des Clients;
- AuthC:: Daten, mit denen sich der Client authentisiert;
- VDc:: Durch Client gesendete Verifikationsdaten;
- Yc:: Abgeleiteter öffentlicher Anfangswert des Clients für den Diffie-Hellmann-Schlüsselaustausch;

- pms:: Erstes gemeinsames Geheimnis;
- ms:: Zweites gemeinsames Geheimnis;

- M4:: Vierte Nachricht;
- VDs:: Durch Server gesendete Verifikationsdaten;

- cwMk:: (client write MAC key) - Bestandteil des dritten gemeinsamen Geheimnisses;
- swMk:: (server write MAC key) - Bestandteil des dritten gemeinsamen Geheimnisses;
- cwk:: (client write key) - Bestandteil des dritten gemeinsamen Geheimnisses;
- swk:: (server write key) -Bestandteil des dritten gemeinsamen Geheimnisses;
- cwl:: (client write initialization vector) -Bestandteil des dritten gemeinsamen Geheimnisses;
- swl:: (server write initialization vector) -Bestandteil des dritten gemeinsamen Geheimnisses.

Nachteilig bei diesem zweiten Verfahren nach TLS ist, dass für die Generierung des Wertes SYs der Server noch ohne Kenntnis der Identität des Clients asymmetrische Kryptographie anwendet, und zwar für den Beginn des Diffie-Hellman-Austausches und für die Erstellung der Signatur zu Ys, bei der er somit Ressourcen an Hauptspeicher und Rechenaufwand einsetzt, die für eingebettete Geräte bereits signifikant sind. Dieser Ressourcenverbrauch fällt also auch bei versehentlich oder absichtlich irregerichteten Verbindungsaufbauten statt und kann schlecht abgewehrt werden.

Nachteilig bei beiden Verfahren nach TLS ist ferner, dass zur Authentisierung/Authentifizierung in beiden Fällen asymmetrische Kryptographie und damit Rechenoperationen mit großen Ganzzahlen erforderlich sind, also Speicher und Rechenzeit besonders beansprucht werden.

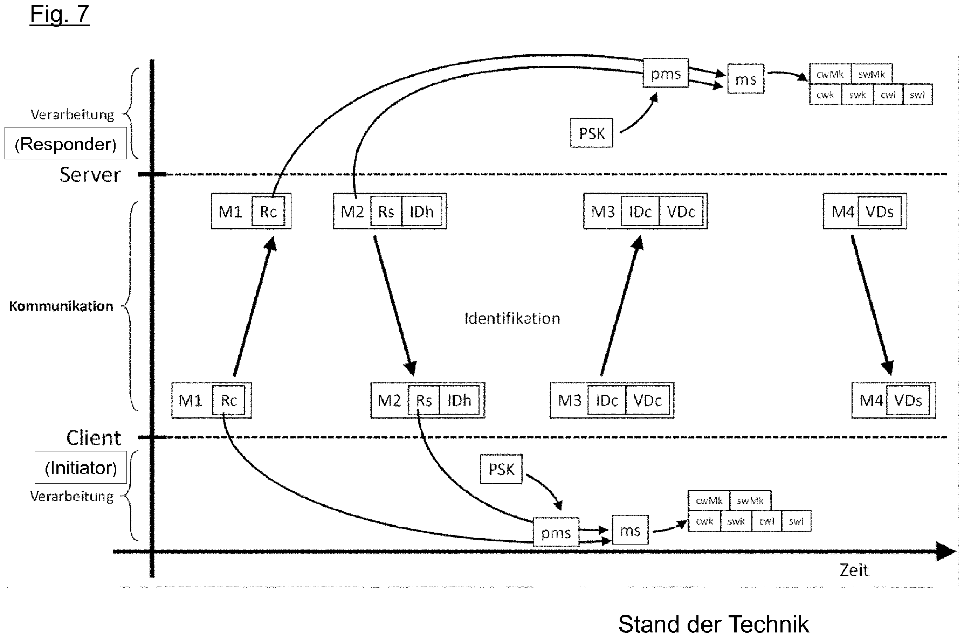

In "RFC 4279 Pre-Shared Key Ciphersuites for Transport Layer Security (TLS)", P. Eronen und H. Tschofenig, The Internet Engineering Task Force, werden zusätzlich zu den zuvor beschriebenen TLS-Verfahren drei weitere TLS-Varianten beschrieben, die auch eine gegenseitige Authentisierung/Authentifizierung der Kommunikationspartner bewirken. Während zwei davon weiterhin asymmetrische Kryptographie verwenden, kommt ein in "RFC 4279 Pre-Shared Key Ciphersuites for Transport Layer Security (TLS)" als "PSK Key Exchange Algorithm" bezeichnetes und Bezug nehmend auf Fig. 7, welche ein grundsätzliches Schema zum Kommunikationsaufbau gemäß TLS mit PSK zeigt, als "TLS mit PSK" bezeichnetes Verfahren allein mit symmetrischer Kryptographie aus, indem das erste gemeinsame Geheimnis ein vorab bei beiden Kommunikationspartnern gespeicherter Wert ist.

Konkret tauschen, wiederum Bezug nehmend auf Fig. 7, am Anfang des Verfahrens "TLS mit PSK" der Client und der Server die Zufallszahlen Rc und Rs aus sowie die Identitäten IDh, als Hinweis auf die Identität des Servers, und IDc als Identität des Clients. Beide verwenden danach ein zuvor bereits bei ihnen gespeichertes gemeinsames Geheimnis PSK, um ein zweites gemeinsames Geheimnis (pre-master secret) pms zu erzeugen. Das zweite gemeinsame Geheimnis verwenden sie, um aus den Zufallszahlen Rc und Rs ein drittes gemeinsames Geheimnis (master secret) ms zu erzeugen. Aus dem dritten gemeinsamen Geheimnis ms wird wiederum sowohl vom Client als auch vom Server ein viertes gemeinsames Geheimnis erzeugt, welches als eine Kombination aus kryptographischen Schlüsseln (cwMk, swMk, cwk, swk, cwl, swl) zur Authentisierung/Authentifizierung und/oder Verschlüsselung der nachfolgenden Kommunikation dient. Bei dieser Authentisierung/Authentifizierung und/oder Verschlüsselung und bei der Ableitung des zweiten, dritten und vierten gemeinsamen Geheimnisses kommen Algorithmen zur Anwendung, wie sie anfangs beim Austausch der Zufallszahlen verhandelt wurden.

Eine Übersicht der in Fig. 7 enthaltenen Bezugszeichen ist in der nachfolgenden Liste aufgeführt.
- PSK:: Im Voraus gespeichertes erste gemeinsames Geheimnis;

- M1:: Erste Nachricht;
- Rc:: Vom Client erzeugte Zufallszahl;

- M2:: Zweite Nachricht;
- Rs:: Vom Server erzeugte Zufallszahl;
- IDh:: Hinweis auf die Identität des Servers;

- pms:: Zweites gemeinsames Geheimnis;
- ms:: Drittes gemeinsames Geheimnis;

- M3:: Dritte Nachricht;
- VDc:: Durch Client gesendete Verifikationsdaten;
- IDc:: Hinweis auf die Identität des Clients;

- M4:: Vierte Nachricht;
- VDs:: Durch den Server gesendete Verifikationsdaten;

- cwMk:: (client write MAC key) - Bestandteil des vierten gemeinsamen Geheimnisses;
- swMk:: (server write MAC key) - Bestandteil des vierten gemeinsamen Geheimnisses;
- cwk:: (client write key) - Bestandteil des vierten gemeinsamen Geheimnisses;
- swk:: (server write key) - Bestandteil des vierten gemeinsamen Geheimnisses;
- cwl:: (client write initialization vector) - Bestandteil des vierten gemeinsamen Geheimnisses;
- swl:: (server write initialization vector) - Bestandteil des vierten gemeinsamen Geheimnisses.

Nachteilig an diesem Verfahren "TLS mit PSK" ist, dass zwar eine Identifikation der Kommunikationseinrichtungen durchgeführt wird, aber keine explizite Authentisierung/Authentifizierung. Wenn eine Seite ihre Identität nur behauptet oder verwechselt, aber nicht das zugehörige gemeinsame Geheimnis kennt, dann entstehen am Ende unterschiedliche Schlüssel für die Authentisierung/Authentifizierung und/oder Verschlüsselung der nachfolgenden Kommunikation. Auch bei diesem Verfahren ist es nachfolgend somit aufwändig, die zwei Fehlerfälle zu unterscheiden, wie sie bei dem Verfahren gemäß der Patentschrift DE 10 2012 220 990 B3 aufgezeigt wurden: Wenn unterschiedliche zweite gemeinsame Geheimnisse entstanden sind, ist es fraglich, ob dies aufgrund einer Verwechslung der Fall war oder ob die für deren Berechnung ausgetauschten Nachrichten bei der Übertragung versehentlich, zum Beispiel durch Störungen, oder absichtlich, zum Beispiel durch Dritte, verändert wurden.

Die OPC Foundation hat für die OPC Unified Architecture (OPC UA) in "OPC Unified Architecture Part 2: Security Model", 2009, "OPC Unified Architecture Part 4: Services", 2009 und "OPC Unified Architecture Part 6: Mappings", 2009, ein Verfahren beschrieben, bei dem zwei Kommunikationspartner, ein Client und ein Server, sich gegenseitig authentifizieren, um am Ende mittels gemeinsamer Geheimnisse sicher zu kommunizieren.

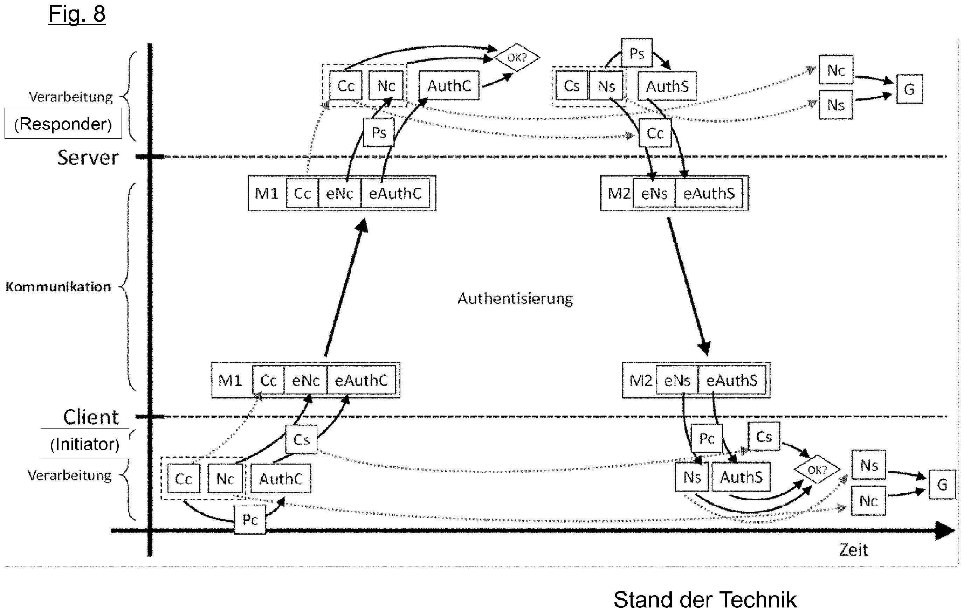

Bezugnehmend auf Fig. 8, welche ein grundsätzliches Schema zum Aufbau einer sicheren Verbindung nach OPC UA, zeigt, hat hierbei der Client im Vorfeld oder am Anfang der Kommunikation bereits Kenntnis erlangt über ein Zertifikat Cs des Servers, welches die Identität und den öffentlichen Schlüssel des Servers enthält. Vor Beginn der Kommunikation sind Client und Server jeweils im Besitz eines asymmetrischen Schlüsselpaares, d.h. eines jeweiligen individuellen privaten Schlüssels und eines dazu passenden, öffentlichen Schlüssels in einem Zertifikat, sowie des zugehörigen Zertifikates, womit sie ihre Identität nachweisen können.

In einer ersten Nachricht MI des Authentisierungs-/Authentifizierungsvorganges sendet der Client sein Zertifikat Cc, welches seine Identität und seinen öffentlichen Schlüssel enthält, zusammen mit einem Wert Nc und einer Signatur AuthC an den Server. Die Signatur AuthC erzeugt der Client als digtale Signatur über relevante Teile der Nachricht MI, mindestens das Zertifikat Cc und den Wert Nc umfassend, unter Verwendung seines privaten Schlüssels Pc, der dem Zertifikat Cc zugeordnet ist. Vor dem Absenden der Nachricht MI verschlüsselt der Client Teile der Nachricht, mindestens den Wert Nc und die Signatur AuthC, mit dem öffentlichen Schlüssel des Servers aus dem Zertifikat Cs, so dass statt des Wertes Nc tatsächlich dessen Verschlüsselung eNc und anstatt der Signatur AuthC tatsächlich deren Verschlüsselung eAuthC übertragen wird. Der Server entschlüsselt die Nachricht MI mit Hilfe seines privaten Schlüssels Ps, der dem Zertifikat Cs zugeordnet ist und überprüft die Signatur AuthC mittels des öffentlichen Schlüssels aus diesem Zertifikat Cc. Zusammen mit der Überprüfung des Zertifikates Cc erhält der Server sichere Kenntnis über die Identität des Clients und Kenntnis über die geheime Zufallszahl Nc.

In einer zweiten Nachricht M2 sendet der Server dem Client analog einen Wert Ns zusammen mit einer Signatur AuthS an den Client. Die Signatur AuthS erzeugt der Server als digitale Signatur über relevante Teile der Nachricht M2, mindestens den Wert Ns und eine Prüfsumme oder andersartige Referenzierung des Zertifikates Cs einbeziehend. Vor dem Absenden der Nachricht M2 verschlüsselt der Server Teile der Nachricht, mindestens den Wert Ns, mit dem öffentlichen Schlüssel des Clients aus dem Zertifikat Cc. Der Client entschlüsselt die Nachricht M2 mit Hilfe seines privaten Schlüssels Pc und überprüft mit dem öffentlichen Schlüssel aus dem Zertifikat Cs die Signatur AuthS. Zusammen mit der Überprüfung des Zertifikates Cs erhält auch der Client sichere Kenntnis über die Identität des Servers und Kenntnis über die geheime Zufallszahl Ns.

Nach dem Austausch der Nachrichten MI und M2 leiten Client und Server jeweils ein gemeinsames Geheimnis G aus den ausgetauschten geheimen Zufallszahlen Nc und Ns ab. Dieses gemeinsame Geheimnis wird als Kombination mehrerer kryptographischer Schlüssel verwendet, um die nachfolgende Kommunikation zu authentisieren/authentifizieren oder zu authentisieren/authentifizieren und zu verschlüsseln. Die bei dem Ableiten verwendeten Algorithmen und die Algorithmen für die nachfolgende Authentisierung/Authentifizierung bzw. Verschlüsselung der Kommunikation werden während des Austausches der Nachrichten MI und M2 bestimmt.

Eine Übersicht der in Fig. 8 enthaltenen Bezugszeichen ist in der nachfolgenden Liste aufgeführt.
- Ps:: Privater Schlüssel des Servers;
- Pc:: Privater Schlüssel des Clients;
- Cs:: Zertifikat des Servers;
- Nc:: Vom Client erzeugte Zufallszahl;
- AuthC:: Durch den Client erzeugte Signatur;

- M1:: Erste Nachricht;
- Cc:: Zertifikat des Clients;
- eNc:: Verschlüsselung von Nc;
- eAuthC:: Verschlüsselung von AuthC;

- Ns:: Vom Server erzeugte Zufallszahl;
- AuthS:: Durch den Server erzeugte Signatur;

- M2:: Zweite Nachricht;
- eNs:: Verschlüsselung von Ns;
- eAuthS:: Verschlüsselung von AuthS;

- G:: gemeinsames Geheimnis.

Bei P. Menezes at al. "This is a Chapter from the Handbook of Applied Cryptography, by Key Establishment Protocols", 31. Dezember 1997 (1997-12-31) wird das "Authenticated Key Exchange Protocol 2 (AKEP2)" angeführt, bei welchem zwei Teilnehmer A und B, die sich gemeinsame symmetrische Schlüssel K und K' teilen, drei Nachrichten austauschen, um daraufhin einen Sitzungsschlüssel "Session Key" W zu generieren. Als Ergebnis kann auch eine gegenseitige Geräte-"Authentication" gegeben sein, welche auf einem "Messages Authentication Code (MAC)"hK", der innerhalb der drei Nachrichten ausgetauscht basiert und von dem jeweils empfangenden Teilnehmer vor der Generierung des Sitzungsschlüssels W auf Korrektheit überprüft wird.

In US 2014/0223182 A1 wird ein Verfahren zur gegenseitigen Authentication und Schlüsselaustausch basierend auf einem symmetrischen Chiffrierungs-Algorithmus beschrieben, bei welchem zunächst eine Authentication durchgeführt und anschließend ein Sitzungsschlüssel erzeugt wird.

Der Erfindung liegt als Aufgabe zugrunde, einen gegenüber dem vorbeschriebenen Stand der Technik nochmals verbesserten Aufbau einer sicheren Kommunikation zwischen zwei Netzwerkeinrichtungen zu schaffen, welcher einen geringen Ressourceneinsatz bedingt und insbesondere auch ein einfaches, differenziertes Erkennen unterschiedlicher Fehlerfälle während des Aufbaus ermöglicht.

Die Lösung nach der Erfindung ist durch ein Verfahren, ein Computerprogrammprodukt und eine Anordnung mit den Merkmalen der unabhängigen Ansprüche gegeben. Bevorzugte Weiterbildungen sind Gegenstand der abhängigen Ansprüche.

Demgemäß schlägt die Erfindung ein Verfahren zum Aufbau einer sicheren Kommunikation zwischen einer ersten Netzwerkeinrichtung (Initiator) und einer zweiten Netzwerkeinrichtung (Responder) in einem Kommunikationsnetzwerk vor, bei welchem unter Verwendung eines symmetrischen Kryptosystems jeweils eine separate Authentisierung/Authentifizierung in Bezug auf die erste und die zweite Netzwerkeinrichtung vor Erzeugung eines für die sichere Kommunikation als gemeinsamen Schlüssel zu verwendenden Geheimnisses durchgeführt wird. Durch das symmetrische Kryptosystem setzen somit beide Netzwerkeinrichtungen jeweils dieselben Geheimnisse als Schlüssel zur Ver- und Entschlüsselung von Datensätzen ein, wobei
die Schritte umfasst sind;
a) Erzeugen auf der ersten Netzwerkeinrichtung eines Datensatzes, der wenigstens eine Zufallszahl (Ni) enthält, und
   Senden einer ersten Nachricht (M1), enthaltend eine Identitätskennung (IDi) der ersten Netzwerkeinrichtung und diesen erzeugten Datensatz, von der ersten Netzwerkeinrichtung an die zweite Netzwerkeinrichtung;
b) Erzeugen auf der zweiten Netzwerkeinrichtung eines Datensatzes, der wenigstens eine Zufallszahl (Nr) enthält, und
   Senden einer zweiten Nachricht (M2), enthaltend eine Identitätskennung (IDr) der zweiten Netzwerkeinrichtung und diesen erzeugten Datensatz, von der zweiten Netzwerkeinrichtung an die erste Netzwerkeinrichtung;
c) Erzeugen auf der ersten Netzwerkeinrichtung eines Datensatzes, der eine erste Signatur (Authl) enthält, und zwar durch Ausführen eines ersten Algorithmus (A1) unter Verwendung eines ersten Geheimnisses (Pw) und von zu signierenden Daten, die aus einem ersten Nachrichtenteil der ersten Nachricht (M1) und einem zweiten Nachrichtenteil der zweiten Nachricht (M2) zusammengesetzt werden, und
   Senden einer dritten Nachricht (M3), enthaltend diesen erzeugten Datensatz, von der ersten Netzwerkeinrichtung an die zweite Netzwerkeinrichtung;
d) Erzeugen auf der zweiten Netzwerkeinrichtung eines Datensatzes, der eine zweite Signatur (Authl') enthält, und zwar durch Ausführen des ersten Algorithmus (A1) unter Verwendung des ersten Geheimnisses (Pw) und von zu signierenden Daten, die aus dem gleichem ersten Nachrichtenteil der ersten Nachricht (M1) und dem gleichem zweiten Nachrichtenteil der zweiten Nachricht (M2) zusammengesetzt werden, wie bei der Erzeugung des die erste Signatur (Authl) enthaltenen Datensatzes,
   und Vergleichen des von der ersten Netzwerkeinrichtung erzeugten, die erste Signatur (Authl) enthaltenen Datensatzes mit dem von der zweiten Netzwerkeinrichtung erzeugten, die zweite Signatur (Authl') enthaltenen Datensatzes;
e) Erzeugen auf der zweiten Netzwerkeinrichtung eines Datensatzes, der eine dritte Signatur (AuthR) enthält, und zwar durch Ausführen eines zweiten Algorithmus (A2) unter Verwendung des ersten Geheimnisses (Pw) und von zu signierenden Daten, die aus einem dritten Nachrichtenteil der ersten Nachricht (M1) und einem vierten Nachrichtenteil der zweiten Nachricht (M2) zusammengesetzt werden, wobei der dritte Nachrichtenteil ein anderer Nachrichtenteil als der erste Nachrichtenteil und/oder der vierte Nachrichtenteil ein anderer Nachrichtenteil als der zweite Nachrichtenteil ist, und
   Senden einer vierten Nachricht (M4), enthaltend diesen erzeugten Datensatzes, von der zweiten Netzwerkeinrichtung an die erste Netzwerkeinrichtung;
f) Erzeugen auf der ersten Netzwerkeinrichtung eines Datensatzes, der eine vierte Signatur (AuthR') enthält, und zwar durch Ausführen des zweiten Algorithmus (A2) unter Verwendung des ersten Geheimnisses (Pw) und von zu signierenden Daten, die entsprechend der dritten Signatur (AuthR) aus dem gleichem dritten Nachrichtenteil der Nachricht (M1) und dem gleichem vierten Nachrichtenteil der Nachricht (M2) zusammengesetzt werden, wie bei der Erzeugung der dritten Signatur (AuthR), und
   Vergleichen des von der zweiten Netzwerkeinrichtung erzeugten, die dritte Signatur (AuthR) enthaltenen Datensatzes mit dem von der ersten Netzwerkeinrichtung erzeugten, die vierte Signatur (AuthR') enthaltenen Datensatzes;
g) Erzeugung von jeweils einem zweiten Geheimnis (G) auf der ersten Netzwerkeinrichtung und auf der zweiten Netzwerkeinrichtung, und zwar jeweils durch Ausführen eines dritten Algorithmus (A3) unter Verwendung des ersten Geheimnisses (Pw) und zumindest einem der zuvor in den Schritten a), b), c), d), e), f) erzeugten Datensätze;
h) Verwenden des zweiten gemeinsamen Geheimnisses (G) durch die erste Netzwerkeinrichtung und die zweite Netzwerkeinrichtung als gemeinsamer Schlüssel für eine sichere Kommunikation zwischen der ersten Netzwerkeinrichtung und der zweiten Netzwerkeinrichtung,

Demgemäß wird ferner ein Computerprogrammprodukt vorgeschlagen, welches die Durchführung eines solchen Verfahrens veranlasst, sowie eine insbesondere zur Durchführung des Verfahrens geeignete Anordnung mit einer ersten Netzwerkeinrichtung und einer zweiten Netzwerkeinrichtung in einem Kommunikationsnetzwerk.

Wesentliche Vorteile sind folglich darin zu sehen,
- dass die Lösung nach der Erfindung auf einem vorher vereinbarten geteilten Geheimnis basiert und folglich kein großer Rechenaufwand, wie ansonsten bei asymmetrischen Kryptographien bzw. Kryptosystemen notwendig ist,
- dass die Lösung nach der Erfindung die Überprüfung, ob die vorgegebenen Identitäten der Kommunikationspartner bestätigt werden können, frühzeitig erlaubt, so dass bei versehentlichem oder absichtlich regelwidrigem Kommunikationsaufbau hierbei belegte Ressourcen wieder schneller freigegeben werden können,
- dass aufgrund der jeweiligen separaten Authentisierung/Authentifizierung mögliche Fehlerfälle auf einfache Weise unterschieden werden können, wobei am Ende geheime und zwischen den Kommunikationspartnern geteilte Schlüssel für die Sicherung der nachfolgenden Kommunikation bereitstellt werden und,
- dass mit dem erfolgreichen Abschluss des Verbindungsaufbaus für eine sichere Kommunikation sicherstellt ist, dass beide Seiten dieselben geteilten Schlüssel errechnet haben können,

Die Erfindung eignet sich somit in bevorzugten Ausführungen insbesondere für eingebettete Systeme mit sehr geringen Ressourcen, insbesondere für als eingebettete Echtzeitsysteme mit eingeschränkten Ressourcen und kurzer Reaktionszeit realisierte industrielle Steuerungen.

Vorstehend beschriebene und weitere Eigenschaften, Merkmale und Vorteile der Erfindung werden noch ersichtlicher aus der nachfolgenden Beschreibung bevorzugter Ausführungsbeispiele unter Bezugnahme auf die beigefügten Zeichnungen, in den zeigen:
- Fig. 1:: ein grundsätzliches Ablaufschema zum erfindungsgemäßen Aufbau einer sicheren Kommunikation;
- Fig. 2:: eine schematische Ansicht eines Beispiels einer Anordnung mit einer ersten und einer zweiten Netzwerkeinrichtung in einem Kommunikationsnetzwerk gemäß der Erfindung;
- Fig. 3: ein grundsätzliches Ablaufschema nach dem Stand der Technik zum Kommunikationsaufbau nach IKEv2;
- Fig. 4: ein grundsätzliches Ablaufschema nach dem Stand der Technik zum Kommunikationsaufbau gemäß DE 10 2012 220 990 B3;
- Fig. 5: ein grundsätzliches Ablaufschema nach dem Stand der Technik zum Kommunikationsaufbau gemäß TLS ohne Diffie-Hellman;
- Fig. 6: ein grundsätzliches Ablaufschema nach dem Stand der Technik zum Kommunikationsaufbau gemäß TLS mit Diffie-Hellman;
- Fig. 7: ein grundsätzliches Ablaufschema nach dem Stand der Technik zum Kommunikationsaufbau gemäß TLS mit PSK;
- und Fig. 8: ein grundsätzliches Ablaufschema nach dem Stand der Technik zum Aufbau einer sicheren Verbindung nach OPC UA.

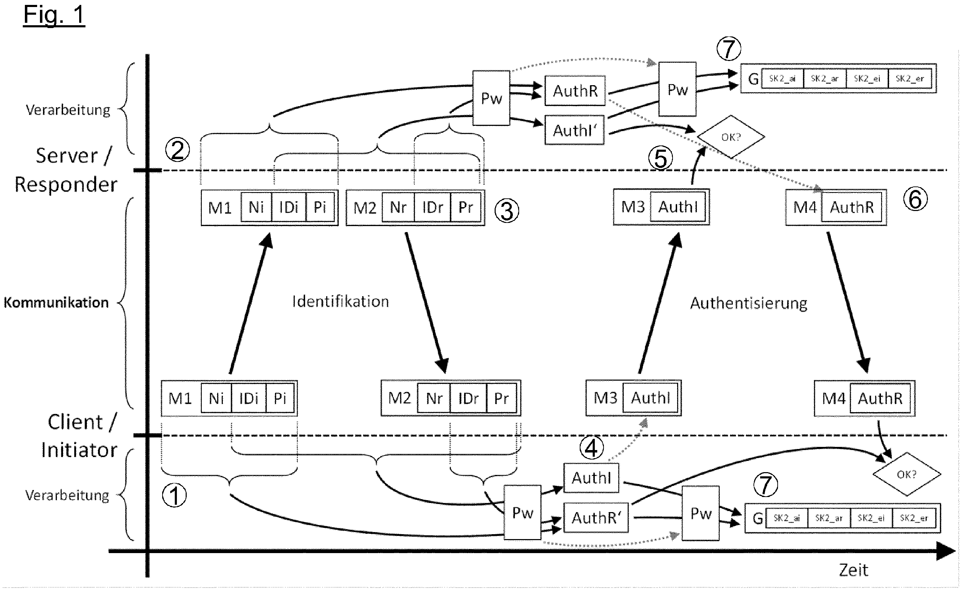

Nachfolgend wird insbesondere auf Fig. 1 Bezug genommen, welche ein grundsätzliches Schema eines bevorzugten Ablaufs im Rahmen der Erfindung zum Aufbauen einer sicheren Kommunikation zeigt.

Im Einzelnen zeigt hierbei Fig. 1 eine bevorzugte Ausführungsform zum Aufbauen einer sicheren Kommunikation zwischen einer ersten Netzwerkeinrichtung, bei Fig. 1 als Client oder Initiator bezeichnet, und einer zweiten Netzwerkeinrichtung, bei Fig. 1 als Server oder Responder bezeichnet, in einem Kommunikationsnetzwerk, wobei das Kommunikationsnetzwerk hierbei aus Übersichtlichkeitsgründen nicht weiter dargestellt ist. Wie aus Fig. 1 ersichtlich, wird hierbei unter Verwendung eines symmetrischen Kryptosystems bzw. symmetrischer Kryptographie, bei welchem/welcher somit beide Netzwerkeinrichtungen jeweils dieselben Geheimnisse als Schlüssel zur Ver- und Entschlüsselung von Datensätzen einsetzen, jeweils eine separate Authentisierung/Authentifizierung in Bezug auf die erste und die zweite Netzwerkeinrichtung durchgeführt, und zwar vor Erzeugung eines für die sichere Kommunikation als gemeinsamen Schlüssel Pw zu verwendenden Geheimnisses G.

Die Erfindung kombiniert demgemäß eine Authentisierung/Authentifizierung mittels vorab geteiltem Geheimnis unter Verwendung symmetrischer kryptographischer Algorithmen mit einem separaten Authentisierungs-/Authentifizierungsschritt vor der Ableitung geteilter Schlüssel für die Sicherung der nachfolgenden Kommunikation. Ein separater Authentisierungs-/Authentifizierungsschritt ist sonst nur aus der Authentisierung/Authentifizierung mittels asymmetrischer Kryptographie bekannt. Der separate Schritt ist bei Verwendung asymmetrischer Algorithmen notwendig, weil im Stand der Technik nach asymmetrischer Authentisierung die nachfolgende Kommunikation mit symmetrischen Verfahren abgesichert wird. Bei symmetrischen Verfahren findet er hingegen im Stand der Technik, wie eingangs diskutiert, keine Verwendung.

Bevor anhand der in Fig. 1 dargestellten bevorzugten Ausführungsform einige zweckmäßige Ausgestaltungen betreffend den Aufbau einer sicheren Kommunikation zwischen zwei Netzwerkeinrichtungen im Rahmen der Erfindung beschrieben werden, wobei eine der Netzwerkeinrichtungen, nachfolgend auch als Client oder Initiator bezeichnet, den Aufbau initiiert und die andere Netzwerkeinrichtung, nachfolgend auch als Server oder Responder bezeichnet, mit der die Kommunikation gewünscht wird, auf den Wunsch zum Aufbau reagiert, ist zunächst eine grundsätzliche Übersicht der in Fig. 1 enthaltenen Bezugszeichen in der nachfolgenden Liste angeführt.
- Pw:: vorab geteiltes Geheimnis bzw. im Voraus bekanntes gemeinsames Geheimnis;

- M1:: Erste Nachricht;
- IDi:: Identität des Clients;
- Ni:: Vom Client neu erzeugte Zufallszahl;
- Pi:: Optionaler Parametersatz vom Client;
- M2:: Zweite Nachricht;
- IDr:: Identität des Servers;
- Nr:: Vom Server neu erzeugte Zufallszahl;
- Pr:: Optionaler Parametersatz vom Server;

- M3:: Dritte Nachricht
- Authl:: Mit symmetrischem kryptographischem Algorithmus vom Client erzeugte Signatur zwecks seiner Authentisierung;
- Authl':: Vom Server zu Prüfzwecken nachgerechnete Signatur zum Vergleich mit Authl zwecks Authentifizierung des Clients;

- M4:: Vierte Nachricht;
- AuthR:: Mit symmetrischem kryptographischem Algorithmus vom Server erzeugte Signatur zwecks seiner Authentisierung;
- AuthR':: Vom Client zu Prüfzwecken nachgerechnete Signatur zum Vergleich mit AuthR zwecks Authentifizierung des Servers;

- G:: Zweites geteiltes Geheimnis bzw. zweites gemeinsames Geheimnis mit folgenden Bestandteilen:
- SK2_ai:: "Secret key for authenticating messages sent by the initiator"; Geheimer Schlüssel zum Authentisieren der vom Client gesendeten Nachrichten;
- SK2_ar:: "Secret key for authenticating messages sent by the responder"; Geheimer Schlüssel zum Authentisieren der vom Server gesendeten Nachrichten
- SK2_ei:: "Secret key for encrypting messages sent by the initiator"; Geheimer Schlüssel zum Verschlüsseln der vom Client gesendeten Nachrichten
- SK2_er:: "Secret key for encrypting messages sent by the responder"; Geheimer Schlüssel zum Verschlüsseln der vom Server gesendeten Nachrichten

Basierend auf Fig. 1 ist demgemäß in einer zweckmäßigen Ausgestaltung vorgesehen, dass auf einer ersten Netzwerkeinrichtung (bei Fig. 1 als Client oder Initiator bezeichnet) zunächst ein Datensatz erzeugt wird, der wenigstens eine Zufallszahl Ni enthält, und dieser Datensatz dann zusammen mit einer Identitätskennung IDi der ersten Netzwerkeinrichtung in einer ersten Nachricht M1 von der ersten Netzwerkeinrichtung an eine zweite Netzwerkeinrichtung gesandt wird. Hierdurch initiiert somit die erste Netzwerkeinrichtung den Aufbau einer sicheren Kommunikation mit der zweiten Netzwerkeinrichtung. Die zweite Netzwerkeinrichtung kann zunächst grundsätzlich von der ersten Netzwerkeinrichtung ausgewählt werden, z.B. aus einer intern gespeicherten Liste von möglichen Netzwerkeinrichtungen, mit denen eine sichere Kommunikation innerhalb eines Kommunikationsnetzwerks durchgeführt werden kann oder darf.

Nach Empfang der ersten Nachricht M1 kann daraufhin auf der zweiten Netzwerkeinrichtung (bei Fig. 1 als Server oder Responder bezeichnet) ein Datensatz erzeugt werden, der gleichermaßen wenigstens eine Zufallszahl Nr enthält, und der dann zusammen mit einer Identitätskennung IDr der zweiten Netzwerkeinrichtung in einer zweiten Nachricht M2 von der zweiten Netzwerkeinrichtung an die erste Netzwerkeinrichtung gesandt wird. Hierdurch reagiert somit die zweite Netzwerkeinrichtung auf den Wunsch der ersten Netzwerkeinrichtung, eine sichere Kommunikation aufzubauen.

Von Vorteil ist, dass bereits mit der Initiierung die Identität der ersten Netzwerkeinrichtung der zweiten Netzwerkeinrichtung mitgeteilt wird, so dass der zweiten Netzwerkeinrichtung auch die Möglichkeit eröffnet wird, zu entscheiden, ob mit der ersten Netzwerkeinrichtung überhaupt eine sichere Kommunikation innerhalb des Kommunikationsnetzwerks durchgeführt werden kann oder darf. In einer zweckmäßigen Weiterbildung ist daher ferner vorgesehen, dass nach Empfang der ersten Nachricht M1 von der zweiten Netzwerkeinrichtung zunächst eine Prüfung der von der ersten Netzwerkeinrichtung übersandten Identitätskennung IDi durchgeführt wird und basierend auf dem Ergebnis dieser Prüfung von der zweiten Netzwerkeinrichtung entschieden wird, ob überhaupt die Nachricht M2, wie zuvor beschrieben, von der zweiten Netzwerkeinrichtung an die erste Netzwerkeinrichtung gesandt wird oder, ob bereits nach Kenntnis der Identität der ersten Netzwerkeinrichtung der Aufbau abgebrochen wird. Stimmt die zweite Netzwerkeinrichtung dem Aufbau zu, bekommt somit auch die erste Netzwerkeinrichtung mit der Nachricht M2 die Identität der zweiten Netzwerkeinrichtung von dieser zugesandt. Auch dies eröffnet nochmals die frühzeitige Möglichkeit, auf Seiten der ersten Netzwerkeinrichtung zu entscheiden, ob die von der zweiten Netzwerkeinrichtung übersandte Identität auch tatsächlich der Netzwerkeinrichtung entspricht, mit welcher die erste Netzwerkeinrichtung eine Verbindung für eine sichere Kommunikation aufzubauen beabsichtigte. In einer zweckmäßigen Weiterbildung ist daher vorgesehen, dass nach Empfang der zweiten Nachricht M2 von der ersten Netzwerkeinrichtung zunächst eine Prüfung der von der zweiten Netzwerkeinrichtung übersandten Identitätskennung IDr durchgeführt wird und basierend auf dem Ergebnis dieser Prüfung von der ersten Netzwerkeinrichtung entschieden wird, ob überhaupt der Aufbau fortgesetzt wird oder abgebrochen wird.

Vorteilhaft ist somit ferner, dass auf beiden Seiten bereits zu diesen Zeitpunkten die Möglichkeit eröffnet ist, frühzeitig zu erkennen, ob eine Anfrage für einen Aufbau einer sicheren Kommunikation bzw. eine Reaktion hierauf fehlgeleitet ist, ohne dass kryptographische Operationen notwendig sind. Die Erzeugung der die Zufallszahl Ni oder Nr enthaltenen Datensätze bedarf hierbei keiner kryptographischen Operationen und also keiner großen Ressourcenbelegung. Folglich kann diese Erzeugung in der Absicht, diese Datensätze gegebenenfalls dann für eine spätere Authentisierung/Authentifizierung einsetzen zu können in zweckmäßiger Weise bereits frühzeitig durchgeführt werden ohne, dass hierfür noch ein separater Nachrichtenaustausch notwendig ist.

Unter der Annahme, dass der Aufbau weitergeführt wird, sieht die Erfindung nach Erhalt der zweiten Nachricht M2 vor, dass auf der ersten Netzwerkeinrichtung ein Datensatz erzeugt wird, der eine erste Signatur Authl enthält, der dann in einer dritten Nachricht M3 von der ersten Netzwerkeinrichtung an die zweite Netzwerkeinrichtung gesandt wird. Die erste Netzwerkeinrichtung authentisiert sich somit hierüber bei der zweiten Netzwerkeinrichtung. Die Erzeugung der ersten Signatur Authl erfolgt hierbei durch Ausführen eines ersten Algorithmus unter Verwendung eines ersten Geheimnisses Pw und von zu signierenden Daten, die aus einem ersten Nachrichtenteil der ersten Nachricht M1 und einem zweiten Nachrichtenteil der zweiten Nachricht M2 zusammengesetzt werden.

Ferner wird auf der zweiten Netzwerkeinrichtung ein Datensatz erzeugt, der eine zweite Signatur Authl' enthält, und zwar auch durch Ausführen des ersten Algorithmus und unter Verwendung des ersten Geheimnisses Pw sowie von zu signierenden Daten, die aus dem gleichem ersten Nachrichtenteil der ersten Nachricht M1 und dem gleichem zweiten Nachrichtenteil der zweiten Nachricht M2 zusammengesetzt werden, wie bei der Erzeugung des die erste Signatur "Authl" enthaltenen Datensatzes. Die zweite Netzwerkeinrichtung kann folglich nach Erhalt der dritten Nachricht M3 eine Authentifizierung der ersten Netzwerkeinrichtung durchführen. Hierzu wird auf der zweiten Netzwerkeinrichtung der von der ersten Netzwerkeinrichtung erzeugte, die erste Signatur Authl enthaltene Datensatz mit dem von der zweiten Netzwerkeinrichtung erzeugten, die zweite Signatur Authl' enthaltenen Datensatz verglichen.

Folglich können beide Netzwerkeinrichtungen einen symmetrischen kryptographischen Algorithmus zur Erzeugung der Signaturen Authl bzw. Authl' einsetzen, da beide hierzu jeweils auf das erste und also gemeinsame Geheimnis Pw aufsetzen und die zu signierenden Daten aus den gleichen Nachrichtenteilen der Nachrichten M1 und M2 zusammensetzen.

Somit wird durch die separate Authentisierung/Authentifizierung der Identität der ersten Netzwerkeinrichtung der zweiten Netzwerkeinrichtung die Möglichkeit eröffnet, wiederum zu entscheiden, ob mit der ersten Netzwerkeinrichtung der Aufbau einer sicheren Kommunikation weiter fortgeführt wird. In einer zweckmäßigen Weiterbildung ist daher ferner vorgesehen, dass von der zweiten Netzwerkeinrichtung unter Ansprechen auf das Ergebnis des Vergleichens der ersten Signatur Authl mit der zweiten Signatur Authl' entschieden wird, ob der Aufbau einer sicheren Kommunikation weiter fortgeführt wird oder das Verfahren an dieser Stelle abgebrochen wird.

Unter der Annahme, dass der Aufbau weitergeführt wird, sieht die Erfindung vor, dass daraufhin auf der zweiten Netzwerkeinrichtung ein Datensatz erzeugt wird, der eine dritte Signatur AuthR enthält und in einer vierten Nachricht M4 von der zweiten Netzwerkeinrichtung an die erste Netzwerkeinrichtung gesandt wird. Die zweite Netzwerkeinrichtung authentisiert sich somit hierüber bei der ersten Netzwerkeinrichtung. Die Erzeugung der dritten Signatur Authl erfolgt hierbei zweckmäßig durch Ausführen eines zweiten Algorithmus unter Verwendung des ersten Geheimnisses Pw und von zu signierenden Daten, die aus einem dritten Nachrichtenteil der ersten Nachricht M1 und einem vierten Nachrichtenteil der zweiten Nachricht M2 zusammengesetzt werden, wobei der dritte Nachrichtenteil ein anderer Nachrichtenteil als der erste Nachrichtenteil und/oder der vierte Nachrichtenteil ein anderer Nachrichtenteil als der zweite Nachrichtenteil ist.

Ferner wird auf der ersten Netzwerkeinrichtung ein Datensatz erzeugt, der eine vierte Signatur AuthR' enthält, und zwar durch Ausführen des zweiten Algorithmus unter Verwendung des ersten Geheimnisses Pw und von zu signierenden Daten, die entsprechend der dritten Signatur AuthR aus dem gleichem dritten Nachrichtenteil der Nachricht M1 und dem gleichem vierten Nachrichtenteil der Nachricht M2 zusammengesetzt werden, wie bei der Erzeugung der dritten Signatur AuthR.
Die erste Netzwerkeinrichtung kann folglich nach Erhalt der vierten Nachricht M4 eine Authentifizierung der zweiten Netzwerkeinrichtung durchführen. Hierzu wird auf der ersten Netzwerkeinrichtung der von der zweiten Netzwerkeinrichtung erzeugte, die dritte Signatur AuthR enthaltene Datensatz mit dem von der ersten Netzwerkeinrichtung erzeugten, die vierte Signatur AuthR' enthaltenen Datensatz verglichen.

Somit wird durch die separate Authentisierung/Authentifizierung der Identität der zweiten Netzwerkeinrichtung wiederum der ersten Netzwerkeinrichtung die Möglichkeit eröffnet, zu entscheiden, ob mit der zweiten Netzwerkeinrichtung der Aufbau einer sicheren Kommunikation weiter fortgeführt wird. In einer zweckmäßigen Weiterbildung ist daher ferner vorgesehen, dass von der ersten Netzwerkeinrichtung unter Ansprechen auf das Ergebnis des Vergleichens der dritten Signatur AuthR mit der vierten Signatur AuthR' entschieden wird, ob der Aufbau einer sicheren Kommunikation weiter fortgeführt wird oder das Verfahren an dieser Stelle abgebrochen wird.

Unter der Annahme, dass der Aufbau weitergeführt wird, sieht die Erfindung vor, dass daraufhin auf der ersten Netzwerkeinrichtung und auf der zweiten Netzwerkeinrichtung jeweils ein zweites Geheimnis G erzeugt werden kann, und zwar jeweils durch Ausführen eines dritten Algorithmus sowie unter Verwendung des ersten Geheimnisses Pw und zumindest einem der zuvor auf der ersten Netzwerkeinrichtung und/oder auf der zweiten Netzwerkeinrichtung erzeugten Datensätze, d.h.
- des wenigstens die Zufallszahl Ni enthaltenen Datensatzes,
- des wenigstens die Zufallszahl Nr enthaltenen Datensatzes,
- des die erste Signatur Authl enthaltenen Datensatzes,
- des die zweite Signatur Authl' enthaltenen Datensatzes,
- des die dritte Signatur AuthR enthaltenen Datensatzes, und/oder
- des die vierte Signatur AuthR' enthaltenen Datensatzes.

Das zweite Geheimnis G kann hierbei bevorzugt eine Kombination aus mehreren kryptographischen Schlüsseln sein, insbesondere eine Kombination aus den vorstehend basierend auf Fig. 1 angeführten kryptographischen Schlüsseln SK2_ai, SK2_ar, SK2_ei und SK2_er.

Es sei angemerkt, dass die Erzeugung des zweiten Geheimnisses G auf der zweiten Netzwerkeinrichtung bereits nach positiven Vergleich auf der zweiten Netzwerkeinrichtung des von der ersten Netzwerkeinrichtung erzeugten, die erste Signatur Authl enthaltenen Datensatzes mit dem von der zweiten Netzwerkeinrichtung erzeugten, die zweite Signatur Authl' enthaltenen Datensatz eingeleitet wird.

Dieses zweite gemeinsame Geheimnis G wird daraufhin durch die erste Netzwerkeinrichtung und die zweite Netzwerkeinrichtung als gemeinsamer Schlüssel für eine sichere Kommunikation zwischen der ersten Netzwerkeinrichtung und der zweiten Netzwerkeinrichtung eingesetzt, insbesondere, zum Signieren und/oder Verschlüsseln der hierbei kommunizierten Datensätze.

In praktischer Ausführung werden auf der ersten und der zweiten Netzwerkeinrichtung zur jeweiligen Erzeugung des zweiten Geheimnisses G jeweils nur auf erzeugte Datensätze mit den jeweils gleichen Daten zurückgegriffen. Insbesondere ist somit vorgesehen, dass auf der ersten und der zweiten Netzwerkeinrichtung jeweils auf wenigstens einen der Datensätze zurückgegriffen wird, welcher eine Zufallszahl Ni, Nr enthält und/oder zweckmäßig in Bezug auf die erste Netzwerkeinrichtung auf wenigstens einen der Datensätze, welcher die erste Signatur Authl, dritte Signatur AuthR oder vierte Signatur AuthR' enthält sowie zweckmäßig in Bezug auf die zweite Netzwerkeinrichtung auf wenigstens einen der Datensätze, welche die erste Signatur Authl, zweite Signatur Authl' oder dritte Signatur AuthR enthält.

In einer zweckmäßigen Ausgestaltung kann im Rahmen der Erfindung ferner das erste Geheimnis Pw auf der ersten Netzwerkeinrichtung sowie auf der zweiten Netzwerkeinrichtung dauerhaft gespeichert oder über eine Eingabeschnittstelle eingeben werden. Im Falle einer Eingabe des Geheimnisses Pw kann diese hierbei jeweils für eine einmalige Verwendung, d.h. jeweils vor dem erneuten Initiieren eines Aufbaus einer sicheren Kommunikation vorgesehen sein oder für eine mehrmalige Verwendung, d.h. für das mehrmalige Initiieren eines Aufbaus einer sicheren Kommunikation. Für die jeweilige Verwendung dieses ersten Geheimnisses Pw kann hierbei vorteilhafterweise auf beiden Netzwerkeinrichtungen entweder direkt das erste Geheimnis Pw eingesetzt werden oder auf beiden Netzwerkeinrichtungen ein auf dem ersten Geheimnis Pw basierender, jedoch identisch abgeleiteter Wert.

Alternativ kann jedoch auch auf einer der beiden Netzwerkeinrichtungen das erste Geheimnis Pw und auf der anderen der beiden Netzwerkeinrichtungen ein basierend auf dem ersten Geheimnis Pw abgeleiteter Wert gespeichert oder über eine Eingabeschnittstelle eingeben werden, wobei in diesem Fall bei der jeweiligen Verwendung des ersten Geheimnisses Pw für beide Netzwerkeinrichtungen ein auf dem ersten Geheimnis Pw basierender, identisch abgeleiteter Wert eingesetzt wird.

Auf beiden Netzwerkeinrichtungen wird somit stets das gleiche Geheimnis Pw oder ein gleicher, jedoch aus dem Geheimnis Pw abgeleiteter Wert eingesetzt. Die Ableitung eines solches Wertes kann hierbei folglich je nach Ausführungsform auf einer jeweiligen solchen Netzwerkeinrichtung oder alternativ vor Eingabe eines solches Wertes in die Netzwerkeinrichtung erfolgen.

Bei Einsatz eines identisch abgeleiteten Wertes kann ein hierfür angewandtes identisches Ableitungsverfahren je nach spezifischer praktischer Umsetzung somit zweckmäßig jeweils sowohl auf der Netzwerkeinrichtung oder vor der Einbringung in die Netzwerkeinrichtung für die Netzwerkeinrichtung durchgeführt werden.

Wie bei Fig. 1 zu sehen, ist ferner bevorzugt vorgesehen, dass die erste Nachricht M1 zusätzlich einen Parametersatz Pi enthält und/oder die zweite Nachricht M2 zusätzlich einen Parametersatz Pr enthält. Je nach spezifischer Ausbildung kann es hierbei zweckdienlich sein, dass der Parametersatz Pi den ersten Algorithmus, den zweiten Algorithmus, den dritten Algorithmus, eine Vorschrift zur Ableitung eines auf dem ersten Geheimnis Pw basierenden Wertes, eine Identifizierung von jeweiligen Nachrichtenteilen zur Erzeugung von Signaturen und/oder eine Identitätskennung der zweiten Netzwerkeinrichtung umfasst.
Auch der Parametersatz Pr kann in entsprechender Weise je nach spezifischer Ausbildung den ersten Algorithmus, den zweiten Algorithmus, den dritten Algorithmus, eine Vorschrift zur Ableitung eines auf dem ersten Geheimnis Pw basierenden Wertes und/oder eine Identifizierung von jeweiligen Nachrichtenteilen zur Erzeugung von Signaturen umfassen.

Wie aus Fig. 1 ferner ersichtlich, wird der erste und/oder dritte Nachrichtenteil der ersten Nachricht M1 bevorzugt ohne Verwendung der die in dieser Nachricht enthaltenen Zufallszahl Ni gebildet.
Ergänzend oder alternativ wird der zweite und/oder vierte Nachrichtenteil der zweiten Nachricht M2 bevorzugt ohne Verwendung der in dieser Nachricht enthaltenen Zufallszahl Nr gebildet.

Die Erfindung bietet darüber hinaus die Möglichkeit, dass die vorbeschriebenen Schritte zum Aufbauen einer sicheren Kommunikation in praktischer Umsetzung auch für den Fall durchgeführt werden können, dass bereits eine vorhandene Kommunikationsbeziehung zwischen der ersten Netzwerkeinrichtung und der zweiten Netzwerkeinrichtung besteht, und diese bereits vorhandene Kommunikationsbeziehung nachträglich abzusichern ist.

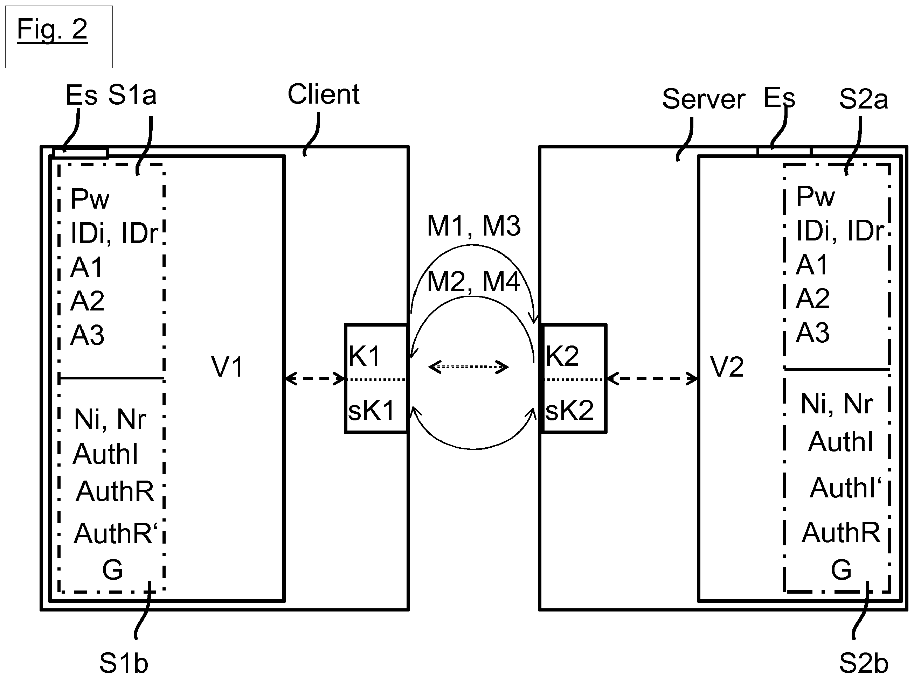

Fig. 2 zeigt stark vereinfacht eine schematische Ansicht eines Beispiels einer Anordnung mit einer ersten und einer zweiten Netzwerkeinrichtung in einem Kommunikationsnetzwerk zur Durchführung eines Verfahrens gemäß der Erfindung. Im Einzelnen ist eine beispielhafte Anordnung mit einer ersten, als Client bezeichneten Netzwerkeinrichtung und einer zweiten, als Server bezeichneten Netzwerkeinrichtung in einem aus Übersichtgründen nicht weiter dargestellten Kommunikationsnetzwerk gezeigt. Zwischen der ersten Netzwerkeinrichtung und der zweiten Netzwerkeinrichtung kann bereits eine ungesicherte Kommunikationsverbindung bestehen, die durch den punktierten Doppelpfeil dargestellt ist.

Auf der ersten Netzwerkeinrichtung sind ein erstes Verarbeitungsmittel V1, ein erstes Kommunikationsmittel K1 und ein erstes sicheres Kommunikationsmittel sK1 gezeigt und auf der zweiten Netzwerkeinrichtung ein zweites Verarbeitungsmittel V2, ein zweites Kommunikationsmittel K2 und ein zweites sicheres Kommunikationsmittel sK2. Eine ungesicherte Kommunikationsverbindung erfolgt somit insbesondere über die Kommunikationsmittel K1 und K2. Insbesondere die Verarbeitungsmittel V1, V2 und die sicheren Kommunikationsmittel sK1, sK2 können Hardware- und/oder Softwarekomponenten umfassen. Bei einer hardwaretechnischen Umsetzung kann das jeweilige Mittel ganz oder teilweise als Vorrichtung oder als Teil einer Vorrichtung, zum Beispiel als Computer oder als Mikroprozessor ausgebildet sein. Bei einer softwaretechnischen Umsetzung kann das jeweilige Mittel ganz oder teilweise als Computerprogrammprodukt, als eine Funktion, als eine Routine, als Teil eines Programmcodes oder als ausführbares Objekt ausgebildet sein. Insbesondere zur Durchführung eines Verfahrens nach der Erfindung, sind die Verarbeitungsmittel V1 und V2, die Kommunikationsmittel K1 und K2 sowie die sicheren Kommunikationsmittel sK1 und sK2 zweckmäßig, wie nachfolgend ausgeführt, eingerichtet.

Das erste Verarbeitungsmittel V1 ist zunächst eingerichtet zum Erzeugen eines Datensatzes, der wenigstens eine Zufallszahl Ni enthält, und das erste Kommunikationsmittel K1 zum Senden von der ersten Netzwerkeinrichtung an die zweite Netzwerkeinrichtung einer ersten Nachricht, die diesen Datensatz und zumindest eine Identitätskennung IDi der ersten Netzwerkeinrichtung enthält.

Das zweite Verarbeitungsmittel V2 ist eingerichtet zum Erzeugen eines Datensatzes, der wenigstens eine Zufallszahl Nr enthält, und das zweite Kommunikationsmittel K2 zum Senden von der zweiten Netzwerkeinrichtung an die erste Netzwerkeinrichtung einer zweiten Nachricht, die diesen Datensatz und zumindest eine Identitätskennung IDr der zweiten Netzwerkeinrichtung enthält.

Die Kommunikationsmittel K1 und K2 sind darüber hinaus zweckmäßig auch zum Empfangen von Nachrichten, die über das Kommunikationsmittel K2 bzw. K1 gesendet worden sind, geeignet eingerichtet.

Ferner ist das erste Verarbeitungsmittel V1 eingerichtet, zum Ausführen eines ersten Algorithmus A1 zum Erzeugen eines Datensatzes, der eine erste Signatur Authl enthält, und zwar unter Verwendung eines ersten Geheimnisses Pw und von zu signierenden Daten, wobei das erste Verarbeitungsmittel V1 eingerichtet ist, diese zu signierenden Daten aus einem ersten Nachrichtenteil der ersten Nachricht M1 und einem zweiten Nachrichtenteil der zweiten Nachricht M2 zusammenzusetzen. Das erste Kommunikationsmittel K1 ist ferner zum Senden einer dritten Nachricht M3 von der ersten Netzwerkeinrichtung an die zweite Netzwerkeinrichtung eingerichtet, die diesen erzeugten Datensatz enthält.

Das zweite Verarbeitungsmittel V2 ist ferner eingerichtet, zum Ausführen des ersten Algorithmus A1 zum Erzeugen eines Datensatzes, der eine zweite Signatur Authl' enthält, und zwar unter Verwendung des ersten Geheimnisses Pw und von zu signierenden Daten, wobei das zweite Verarbeitungsmittel V2 eingerichtet ist, diese zu signierenden Daten aus dem gleichem ersten Nachrichtenteil der ersten Nachricht M1 und dem gleichem zweiten Nachrichtenteil der zweiten Nachricht M2 zusammenzusetzen, wie das erste Verarbeitungsmittel V1 bei der Erzeugung des die erste Signatur Authl enthaltenen Datensatzes. Das zweite Verarbeitungsmittel V2 ist darüber hinaus eingerichtet zum Vergleichen des von der ersten Netzwerkeinrichtung erzeugten, die erste Signatur Authl enthaltenen Datensatzes mit dem auf der zweiten Netzwerkeinrichtung erzeugten, die zweite Signatur Authl' enthaltenen Datensatzes.

Ferner ist das zweite Verarbeitungsmittel V2 eingerichtet, zum Ausführen eines zweiten Algorithmus A2 zum Erzeugen eines Datensatzes, der eine dritte Signatur AuthR enthält, unter Verwendung des ersten Geheimnisses Pw und von zu signierenden Daten, wobei das zweite Verarbeitungsmittel V2 eingerichtet ist, diese zu signierenden Daten aus einem dritten Nachrichtenteil der ersten Nachricht M1 und einem vierten Nachrichtenteil der zweiten Nachricht M2 zusammenzusetzen, wobei der dritte Nachrichtenteil ein anderer Nachrichtenteil als der erste Nachrichtenteil und/oder der vierte Nachrichtenteil ein anderer Nachrichtenteil als der zweite Nachrichtenteil ist, und wobei das zweite Kommunikationsmittel K2 ferner eingerichtet ist, zum Senden einer vierten Nachricht M4, enthaltend diesen erzeugten Datensatz, von der zweiten Netzwerkeinrichtung an die erste Netzwerkeinrichtung.

Auch das erste Verarbeitungsmittel V1 ist eingerichtet zum Ausführen des zweiten Algorithmus A2 auf der ersten Netzwerkeinrichtung zum Erzeugen eines Datensatzes, der eine vierte Signatur AuthR' enthält, unter Verwendung des ersten Geheimnisses Pw und von zu signierenden Daten, wobei das erste Verarbeitungsmittel V1 ferner eingerichtet ist, diese zu signierenden Daten entsprechend der dritten Signatur AuthR aus dem gleichem dritten Nachrichtenteil der Nachricht M1 und dem gleichem vierten Nachrichtenteil der Nachricht M2 zusammenzusetzen, wie das zweite Verarbeitungsmittel V2 bei der Erzeugung des die dritte Signatur AuthR enthaltenen Datensatzes, und wobei das erste Verarbeitungsmittel V1 eingerichtet sind, zum Vergleichen des von der zweiten Netzwerkeinrichtung erzeugten, die dritte Signatur AuthR enthaltenen Datensatzes mit dem von der ersten Netzwerkeinrichtung erzeugten, die vierte Signatur AuthR' enthaltenen Datensatz.

Sowohl das erste V1 und das zweite Verarbeitungsmittel V2 ist ferner eingerichtet zum Ausführen eines dritten Algorithmus A3, zum jeweiligen Erzeugen von einem gemeinsamen zweiten Geheimnis G unter Verwendung des ersten Geheimnisses Pw und zumindest einem der Datensätze, die die Zufallszahl Ni, die Zufallszahl Nr, erste Signatur Authl, die zweite Signatur Authl', die dritte Signatur AuthR oder die vierte Signatur AuthR' enthalten;
Die ersten und zweiten sicheren Kommunikationsmittel sK1 und sK2 sind schließlich eingerichtet, zum Verwenden des gemeinsamen zweiten Geheimnisses G als gemeinsamen Schlüssel für eine sichere Kommunikation zwischen der ersten Netzwerkeinrichtung und der zweiten Netzwerkeinrichtung, d.h. insbesondere zum Authentisieren/Authentifizieren und/oder zur Ver- und Entschlüsselung von Datensätzen zur Durchführung einer sicheren Kommunikation. Das Senden und Empfangen entsprechend abgesicherter Datensätze kann in praktischer Umsetzung einrichtungsspezifisch dann auch über die sicheren Kommunikationsmittel sK1 und sK2 oder wiederum über die Kommunikationsmittel K1 und K2 erfolgen.

Wie bereits angeführt, sind folglich die Kommunikationsmittel K1 und K2 in praktischer Umsetzung auch zum Empfangen von Nachrichten, die über das Kommunikationsmittel K2 bzw. K1 gesendet worden sind, geeignet eingerichtet, d.h. insbesondere das Kommunikationsmittel K1 zumindest zum Empfangen der Nachrichten M2 und M4 sowie das Kommunikationsmittel K2 zumindest zum Empfangen der Nachrichten M1 und M3.

Bei der Anordnung gemäß Fig. 2 sind ferner dargestellt Speicher, die aus reinen Darstellungsgründen jeweils in zwei Speicherbereiche S1a und S1b bzw. S2a und S2b unterteilt sind und auf welche insbesondere die Verarbeitungsmittel V1 oder V2 zugreifen können.
Hierbei können z.B. im Speicherbereich S1a des Clients das erste Geheimnis Pw, die Identitätskennungen IDi und IDr sowie der erste, der zweite und der dritte Algorithmus A1, A2 und A3 jeweils dauerhaft gespeichert und/oder über eine Eingabeschnitte Es eingegeben sein.

Je nach spezifischer Ausbildung kann jedoch auch z.B. der erste Algorithmus, der zweite Algorithmus, der dritte Algorithmus, eine Vorschrift zur Ableitung eines auf dem ersten Geheimnis Pw basierenden Wertes und/oder eine Identifizierung von jeweiligen Nachrichtenteilen zur Erzeugung von Signaturen vom Server an den Client gesandt werden, welche dann z.B. im Speicherbereich S1a abgelegt werden.
Auch im Speicherbereich S2a des Servers können z.B. das erste Geheimnis Pw, die Identitätskennung IDr sowie der erste, der zweite und der dritte Algorithmus A1, A2 und A3 jeweils dauerhaft gespeichert und/oder über eine Eingabeschnitte Es eingegeben werden.

Je nach spezifischer Ausbildung kann jedoch auch z.B. der erste Algorithmus, der zweite Algorithmus, der dritte Algorithmus, eine Vorschrift zur Ableitung eines auf dem ersten Geheimnis Pw basierenden Wertes, eine Identifizierung von jeweiligen Nachrichtenteilen zur Erzeugung von Signaturen und/oder eine Identitätskennung der zweiten Netzwerkeinrichtung vom Client an den Server gesandt werden, welche dann z.B. im Speicherbereich S1a abgelegt werden.

In den Speicherbereichen S1b und S2b des Clients bzw. des Servers können z.B. die Zufallszahlen Ni und Nr, das zweite Geheimnis G sowie die Signaturen Authl, AuthR und AuthR' bzw. die Zufallszahlen Ni und Nr, das zweite Geheimnis G sowie die Authl, Authl' und AuthR für die jeweils benötigte abgelegt werden.

Auch die Identitätskennung Idi kann im Speicherbereich S2a oder S2b des Servers gespeichert sein bzw. abgelegt werden, zumindest, sofern je nach weiterer, nachfolgend noch beschriebener Ausführung das Verarbeitungsmittel V2 in der Lage sein soll, auf diese gegebenenfalls zurückgreifen kann.

Nochmals insbesondere mit Bezugnahme auf die Fig. 1 ist somit bei besonders zweckmäßigen Ausführungen der Erfindung zum Aufbau einer sicheren Kommunikation, nachfolgend auch als Verbindungsaufbau (d.h. für eine sichere Kommunikation) bezeichnet, vor diesem Verbindungsaufbau bei beiden Netzwerkeinrichtungen, d.h. dem Initiator und dem Responder, ein geteiltes Geheimnis Pw bekannt.

Die Bekanntmachung kann vor jedem Verbindungsaufbau geschehen, zum Beispiel, wenn an einer Netzwerkeinrichtung eine Eingabeeinheit bzw. Eingabeschnittstelle vorhanden ist und ein Benutzer der Netzwerkeinrichtung das Geheimnis Pw direkt vor dem Verbindungsaufbau eingibt. Die Bekanntmachung von Pw kann auch einmalig für mehrere oder alle nachfolgende Verbindungsaufbauten geschehen, wenn zum Beispiel die Netzwerkeinrichtung ein eingebettetes System im Feldeinsatz ist, bei deren Betrieb kein Benutzer vor Ort ist. Bei letzterem Beispiel kann das Geheimnis Pw z.B. auch in der Konfiguration der Netzwerkeinrichtung oder eines diese Netzwerkeinrichtung enthaltenen Gerätes enthalten sein.

Insbesondere kann somit auf beiden Netzwerkeinrichtung das Geheimnis Pw vorab gespeichert werden oder auf der zweiten Netzwerkeinrichtung kann das Geheimnis Pw vorab gespeichert und auf der ersten Netzwerkeinrichtung das Geheimnis Pw durch einen Benutzer vor jedem Verbindungsaufbau eingegeben werden oder auf der zweiten Netzwerkeinrichtung kann das Geheimnis Pw vorab gespeichert und auf dem Client das Geheimnis Pw durch einen Benutzer vorab zur Verwendung für eine Menge folgender Verbindungsaufbauten eingegeben werden.
Zunächst erzeugt der Client in einem bei Fig. 1 mit dem Bezugszeichen 1 angedeuteten Schritt des Verbindungsaufbaus eine Nachricht M1 und sendet sie an den Server. Die Nachricht M1 umfasst die Identität IDi des Clients, eine vom Client neu erzeugte Zufallszahl Ni und optional einen Parametersatz Pi. Der Parametersatz Pi kann Algorithmen nennen, welche von den Netzwerkeinrichtungen während des Verbindungsaufbaus zur Authentisierung/Authentifizierung verwendet werden sollen. Pi kann z.B. Algorithmen nennen, welche nach Abschluss des Verbindungsaufbaus für den Schutz der weiteren Kommunikation verwendet werden sollen. Vorteilhaft ist es, wenn der Client im Parametersatz Pi die angenommene oder gewünschte Identität des Servers nennt. Denn dann kann der Server bei der Verarbeitung von M1 entscheiden, ob der Verbindungsaufbau wirklich zu ihm gewünscht ist oder fehlgeleitet wurde. Die Nennung der angenommenen oder gewünschten Identität ist besonders vorteilhaft, wenn der Server selbst verschiedene Identitäten hat, zum Beispiel unterschiedliche Identitäten zur Kommunikation mit unterschiedlichen Gruppen von Clients oder jeweils eine Identität pro von ihm bereitgestellten Dienst.

Dann verarbeitet der Server in einem bei Fig. 1 mit dem Bezugszeichen 2 angedeuteten Schritt die empfangene Nachricht M1 und entscheidet, ob er einem Verbindungsaufbau mit der benannten Identität IDi des Clients zustimmt. Vorteilhaft ist hierbei, dass keine kryptographische Operation notwendig ist, um fehlgeleitete Anfragen zum Verbindungsaufbau an dieser Stelle zu erkennen.

Falls der Server dem Verbindungsaufbau zustimmt, antwortet er in einem bei Fig. 1 mit dem Bezugszeichen 3 angedeuteten Schritt dem Client mit einer Nachricht M2, welche seine Identität IDr, eine von ihm erzeugte Zufallszahl Nr und optional einen Parametersatz Pr enthält. Der Parametersatz Pr kann z.B. die Kombination von Algorithmen nennen, welche vom Server zur Authentisierung/Authentifizierung im Zuge des Verbindungsaufbaus ausgewählt wurden, zum Beispiel als Reaktion auf eine Menge von Algorithmen, welche der Client zu diesem Zweck in Pi vorgeschlagen hat. Pr kann auch jene Kombination von Algorithmen nennen, welche nach Abschluss des Verbindungsaufbaus für den Schutz der weiteren Kommunikation verwendet werden soll, zum Beispiel als Reaktion auf eine Menge von Algorithmen, welche der Client zu diesem Zweck in Pi vorgeschlagen hat.

In einem bei Fig. 1 mit dem Bezugszeichen 4 angedeuteten Schritt erzeugt der Client eine Nachricht M3 und versendet sie an den Server. Die Nachricht M3 enthält eine mit symmetrischen kryptographischen Algorithmen erzeugte Signatur Authl, bei welcher das geteilte Geheimnis Pw als Schlüssel zur Erzeugung der Signatur und die signierten Daten zusammengesetzt sind, z.B. aus der Nachricht M1 ohne die Zufallszahl Ni und der kompletten Nachricht M2. Ein möglicher Algorithmus hierfür ist beispielsweise eine Nachrichtenauthentisierung mittels HMAC-MD5 wie es beispielsweise beschrieben ist, in:
H. Krawczyk, M. Bellare and R. Canetti, "RFC 2104 - HMAC: Keyed-Hashing for Message Authentication," Internet Engineering Task Force (IETF), 1997. Wie bereits vorstehend ausgeführt, liegt ein wesentlicher Vorteil bei der Verwendung einer symmetrischen Signatur für eingebettete Systeme insbesondere darin, dass sie weniger Ressourcen (Rechenzeit und Verarbeitungsspeicher) benötigen als asymmetrische Verfahren.

In einem bei Fig. 1 mit dem Bezugszeichen 5 angedeuteten Schritt vergleicht der Server die Signatur Authl aus der Nachricht M3 mit einer selbst neu errechneten Signatur Authl'. Damit erkennt der Server, ob der Client im Besitz desselben Geheimnisses Pw ist.

Anschließend versendet der Server in einem bei Fig. 1 mit dem Bezugszeichen 6 angedeuteten Schritt im Falle der positiven Prüfung der Signatur Authl ebenfalls eine von ihm erzeugte Signatur AuthR in der Nachricht M4 zum Client. Die Signatur AuthR ist dabei ebenfalls mit einem symmetrischen kryptographischen Algorithmus erzeugt, bei dem ebenfalls das geteilte Geheimnis Pw als Signaturschlüssel angewendet wird. Dieses Mal sind die signierten Daten die Kombination z.B. aus der kompletten Nachricht M1 mit der Nachricht M2 vermindert um die Zufallszahl Nr.

Alternative zweckmäßige Variationsmöglichkeiten in Bezug auf die Signaturen Authl und AuthR können zum Beispiel sein:
a) Authl = Signatur von M1 und M2 sowie unter Verwendung von Pw und AuthR = Signatur von M1 und M2, jedoch ohne Nr sowie unter Verwendung von Pw;
b) Authl = Signatur von M1 und M2 jedoch ohne Nr sowie unter Verwendung von Pw und AuthR = Signatur von M1 und M2 sowie unter Verwendung von Pw;
c) Authl = Signatur von M1 und M2 sowie unter Verwendung von Pw und AuthR = Signatur von M1 jedoch ohne Ni und M2 sowie unter Verwendung von Pw;
d) Authl = Signatur von M1 jedoch ohne Ni und M2 sowie unter Verwendung von Pw und AuthR = Signatur von M1 und M2 sowie unter Verwendung von Pw.

Wesentlich im Rahmen besonders zweckmäßiger Ausführungen der Erfindung ist es, dass die Werte Authl und AuthR nicht gleich sind. Andernfalls könnte ein Angreifer gegebenenfalls eine sehr einfache Attacke durchführen, wenn er die ausgetauschten Nachrichten manipulieren kann. Denn er würde zur Berechnung von AuthR ja nicht mehr das Geheimnis Pw benötigen, sondern setzt einfach den Wert von Authl in die Nachricht M4 als Wert von AuthR ein. Es wäre dem Angreifer also insbesondere ohne Kenntnis von Pw möglich, vom ihm gewählte Inhalte für die Nachrichten M1 und M3 so zu bestimmen, dass vom Server keine Manipulation erkannt wird.

Aus den Signaturen Authl und AuthR leiten Server und Client in bei Fig. 1 mit den Bezugszeichen 7 angedeuteten Schritten unter Verwendung des ersten Geheimnisses Pw ein zweites Geheimnis G ab, welches insbesondere eine Kombination aus mehreren kryptographischen Schlüsseln SK2_ai, SK2_ar, SK2_ei, SK2_er ist, welche zur Absicherung der nachfolgenden Kommunikation zum Beispiel durch Signieren und/oder Verschlüsseln/Entschlüsseln verwendet werden. Hierzu verwenden Server und Client zuvor vereinbarte symmetrische Algorithmen, zum Beispiel HMAC-MD5, wobei Pw als Schlüssel und die Signaturen Authl und AuthR als Daten verwendet werden.

Als Varianten können anstatt der Signaturen Authl und AuthR in den bei Fig. 1 mit den Bezugszeichen 7 angedeuteten Schritten auch z.B. lediglich die Zufallszahlen Ni und Nr verwendet werden.
Es sei jedoch darauf hingewiesen, dass durch die Verwendung von zumindest einer identischen Signatur, welche beiden Netzwerkeinrichtungen vorliegt, sei es durch eigene Erzeugung oder durch Empfang, dann auch eine kryptographische Absicherung signierter Bestandteile der Nachrichten M1 und M2 erfolgt, zum Beispiel der Identitäten IDi und IDr und/oder der optionalen Parameter Pi und Pr. Eine solche fehlt hingegen bei der ausschließlichen Verwendung der Werte Ni und Nr. Außerdem muss dann auf den Netzwerkeinrichtungen bzw. den diese Netzwerkeinrichtungen beherbergenden Geräten zwingend solange Arbeitsspeicher für die Werte Ni und Nr reserviert werden, damit sie noch parat sind, wenn der Algorithmus A3 ausgeführt wird. Eine der Signaturen steht hingegen wegen des direkt vorausgegangenen Vergleichs wesentlich wahrscheinlicher zu diesem Zeitpunkt noch im Arbeitsspeicher.

Mögliche Variationen in Bezug auf die zweiten Geheimnisse können folglich zum Beispiel sein:
a) G = Ausführen von A3 unter Verwendung von Pw, Ni, Nr;
b) G = Ausführen von A3 unter Verwendung von Pw, Authl, AuthR;
c) G = Ausführen von A3 unter Verwendung von Pw, Ni, AuthR;
d) G = Ausführen von A3 unter Verwendung von Pw, Authl, Nr;
Wobei im Falle eines positiven Vergleichs der ersten Signatur mit der zweiten Signatur auch gegebenenfalls Authl' anstelle von Authl, d.h. bei Verifikation des Vorliegens identischer Signaturen, auf der zweiten Netzwerkeinrichtung und Falle eines positiven Vergleichs der dritten Signatur mit der vierten Signatur, d.h. bei Verifikation des Vorliegens identischer Signaturen, auch gegebenenfalls AuthR' anstelle von AuthR auf der ersten Netzwerkeinrichtung verwendet werden kann.

Erst nach dem erfolgreichen Absenden der Nachricht M4 beim Server beziehungsweise dem Empfangen der Nachricht M4 beim Client beginnen die Netzwerkeinrichtungen mit der Absicherung der nachfolgenden sicheren Kommunikation mithilfe der symmetrischen Schlüssel, die sie mit dem zweiten geteilten Geheimnis G erzeugt haben. Hierbei ist vorteilhaft, dass im Falle einer negativen Prüfung der Signatur Authl durch den Server, der Server noch eine Antwort im Klartext mit der Ursachenbeschreibung an den Client senden kann.

Weil gemäß der Erfindung die Identifikation und Authentisierung/Authentifizierung in getrennten Schritten stattfindet bzw. eingeleitet wird, die Identifikation mit dem Austausch der Nachrichten M1 und M2, die Authentisierung/Authentifizierung mit dem Austausch der Nachrichten M3 und M4, können sehr leicht die Fehlerfälle unterschieden werden, die durch nicht passende Identitäten oder andererseits durch nicht identische Geheimnisse Pw entstehen.

Vorteilhaft ist an den separaten Authentisierungen/Authentifizierungen, welche Versand, Empfang und Verarbeitung der Nachrichten M3 oder M4 umfassen, dass durch die jeweilige Prüfung von AuthR und Authl Client und Server sicher sind, dass sie im Besitz desselben Pw und derselben Werte von Ni und Nr sind. Folglich verwenden Sie für die nachfolgende Absicherung der Kommunikation denselben Wert für G und damit ist für Fehler bei der Prüfung der nachfolgenden Kommunikation (zum Beispiel deren Signaturen) keine fehlerhafte Authentisierung/Authentifizierung ursächlich, sondern stets ein Übertragungsfehler oder eine Manipulation. Folglich können diese Fehler unterschieden werden.
Wie bereits vorstehend erwähnt, setzt nicht voraus, dass zwischen der ersten und zweiten Netzwerkeinrichtung noch keine Kommunikationsbeziehung besteht, bevor das Verfahren eingesetzt wird. Eine bereits vorhandene Kommunikationsbeziehung kann nachträglich durch das Anwenden des Verfahrens erfindungsgemäß abgesichert werden.

Wie bereits vorstehend aufgezeigt, entstehen in Bezug auf das erste Geheimnis Pw darüber hinaus vorteilhafte Varianten, wenn während des gesamten Verbindungsaufbaus (d.h. für eine sichere Kommunikation) die Netzwerkeinrichtungen bei der Verwendung des ersten Geheimnisses anstelle von Pw einen aus Pw abgeleiteten Wert einsetzen, zum Beispiel einen Wert, welcher mittels einer HMAC(keyed-hash message authentication code)-Funktion oder einer Key-Derivation-Function aus Pw erzeugt wurde, beispielsweise mittels bereits erwähnter HMAC-MD5 oder der in RSA Laboratories, "PKCS #5 v2.0: Password-Based Cryptography Standard," 1999 beschriebenen Funktion PBKDF2 (Password-Based Key Derivation Function 2).

Bei der Ableitung können in vorteilhafter Weise Merkmale einfließen, welche für das beabsichtigte Kommunikationsprotokoll individuell sind. Dieses erhöht die Sicherheit, wenn dasselbe Geheimnis bei einer Netzwerkeinrichtung für verschiedene Kommunikationsprotokolle verwendet werden soll. Besonders vorteilhaft ist die Verwendung von PBKDF2, wenn bei der ersten Netzwerkeinrichtung größere Ressourcen existieren, wie zum Beispiel ein schnelles Rechenwerk, und ein Benutzer das Geheimnis Pw eingibt und auf der zweiten Netzwerkeinrichtung nur der mittels PBKDF2 abgeleitete Wert gespeichert wird, weil dann auf der zweiten, ressourcenarmen Netzwerkeinrichtung wesentlich weniger Rechenarbeit anfällt, durch das Kopieren des aus Pw per PBKDF2 abgeleiteten Wertes aber nicht Pw zurückgewonnen werden kann.

Folglich können die Netzwerkeinrichtungen im Rahmen der Erfindung bei der Verwendung des ersten Geheimnisses Pw anstelle von Pw auch einen aus Pw abgeleiteten Wert einsetzen, wobei bei der Ableitung Pw zweckmäßig mit einer Konstanten kombiniert wird, wobei die Konstante z.B. das nach dem Verbindungsaufbau verwendete Kommunikationsprotokoll identifiziert. Dies ist somit besonders vorteilhaft, wenn dieselben beiden Netzwerkeinrichtungen mit verschiedenen Protokollen kommunizieren und für jedes Protokoll jeweils eine sichere Verbindung nach den beschriebenen Verfahren aufbauen. Es können dann anstelle von Pw für jedes Kommunikationsprotoll unterschiedliche Geheimnisse abgeleitet und eingesetzt werden. Für einen Angreifer ist es folglich schwieriger, für das jeweilige Kommunikationsprotokoll das Geheimnis zu erraten.

Alternativ kann im Rahmen der Erfindung zum Verbindungsaufbau für die sichere Kommunikation z.B. auch auf einer Netzwerkeinrichtung nicht das Geheimnis Pw selbst, sondern ein von ihm abgeleiteter Wert gespeichert werden, zum Beispiel ein Wert, der nach Anwendung einer Key-Derivation-Function auf Pw entsteht. Auf der anderen Netzwerkeinrichtung wird hingegen das Geheimnis Pw gespeichert oder vor jedem Verbindungsaufbau neu eingegeben und vor jeder Verwendung erneut ein abgeleiteter Wert errechnet und eingesetzt. Dies ist somit besonders vorteilhaft, wenn von zentraler Stelle mit demselben Geheimnis Pw auf viele verschiedene Netzwerkeinrichtungen oder diese beherbergenden Geräte zugegriffen werden soll und die Ableitung von Pw jeweils eine Netzwerk- und/oder Geräteidentität einbezieht. Denn dann ist es einem Angreifer, der eine dieser Netzwerkeinrichtungen oder eines dieser Gerät "stielt" und der Ableitung des Geheimnisses Pw habhaft wird, trotzdem im Wesentlichen nicht möglich, anstelle der Zentrale auf die anderen Geräte zuzugreifen, weil sich aus der Ableitung des Geheimnisses Pw nicht das Geheimnis selbst bestimmen lässt, jedenfalls nur mit hohem Aufwand.

## Patentansprüche

1. Verfahren zum Aufbau einer sicheren Kommunikation zwischen einer ersten Netzwerkeinrichtung (Initiator) und einer zweiten Netzwerkeinrichtung (Responder) in einem Kommunikationsnetzwerk, wobei unter Verwendung eines symmetrischen Kryptosystems, bei welchem somit beide Netzwerkeinrichtungen jeweils dieselben Geheimnisse als Schlüssel zur Ver- und Entschlüsselung von Datensätzen einsetzen, jeweils eine separate Authentisierung/Authentifizierung in Bezug auf die erste und die zweite Netzwerkeinrichtung vor Erzeugung eines für die sichere Kommunikation als gemeinsamen Schlüssel zu verwendenden Geheimnisses durchgeführt wird, **dadurch gekennzeichnet, dass** die Schritte umfasst sind:
a) Erzeugen auf der ersten Netzwerkeinrichtung eines Datensatzes, der wenigstens eine Zufallszahl (Ni) enthält, und
Senden einer ersten Nachricht (M1), enthaltend eine Identitätskennung (IDi) der ersten Netzwerkeinrichtung und diesen erzeugten Datensatz, von der ersten Netzwerkeinrichtung an die zweite Netzwerkeinrichtung;
b) Erzeugen auf der zweiten Netzwerkeinrichtung eines Datensatzes, der wenigstens eine Zufallszahl (Nr) enthält, und
Senden einer zweiten Nachricht (M2), enthaltend eine Identitätskennung (IDr) der zweiten Netzwerkeinrichtung und diesen erzeugten Datensatz, von der zweiten Netzwerkeinrichtung an die erste Netzwerkeinrichtung;
c) Erzeugen auf der ersten Netzwerkeinrichtung eines Datensatzes, der eine erste Signatur (Authl) enthält, und zwar durch Ausführen eines ersten Algorithmus (A1) unter Verwendung eines ersten Geheimnisses (Pw) und von zu signierenden Daten, die aus einem ersten Nachrichtenteil der ersten Nachricht (M1) und einem zweiten Nachrichtenteil der zweiten Nachricht (M2) zusammengesetzt werden, und
Senden einer dritten Nachricht (M3), enthaltend diesen erzeugten Datensatz, von der ersten Netzwerkeinrichtung an die zweite Netzwerkeinrichtung;
d) Erzeugen auf der zweiten Netzwerkeinrichtung eines Datensatzes, der eine zweite Signatur (Authl') enthält, und zwar durch Ausführen des ersten Algorithmus (A1) unter Verwendung des ersten Geheimnisses (Pw) und von zu signierenden Daten, die aus dem gleichem ersten Nachrichtenteil der ersten Nachricht (M1) und dem gleichem zweiten Nachrichtenteil der zweiten Nachricht (M2) zusammengesetzt werden, wie bei der Erzeugung des die erste Signatur (Authl) enthaltenen Datensatzes,
und Vergleichen des von der ersten Netzwerkeinrichtung erzeugten, die erste Signatur (Authl) enthaltenen Datensatzes mit dem von der zweiten Netzwerkeinrichtung erzeugten, die zweite Signatur (Authl') enthaltenen Datensatzes;
e) Erzeugen auf der zweiten Netzwerkeinrichtung eines Datensatzes, der eine dritte Signatur (AuthR) enthält, und zwar durch Ausführen eines zweiten Algorithmus (A2) unter Verwendung des ersten Geheimnisses (Pw) und von zu signierenden Daten, die aus einem dritten Nachrichtenteil der ersten Nachricht (M1) und einem vierten Nachrichtenteil der zweiten Nachricht (M2) zusammengesetzt werden, wobei der dritte Nachrichtenteil ein anderer Nachrichtenteil als der erste Nachrichtenteil und/oder der vierte Nachrichtenteil ein anderer Nachrichtenteil als der zweite Nachrichtenteil ist, und
Senden einer vierten Nachricht (M4), enthaltend diesen erzeugten Datensatzes, von der zweiten Netzwerkeinrichtung an die erste Netzwerkeinrichtung;
f) Erzeugen auf der ersten Netzwerkeinrichtung eines Datensatzes, der eine vierte Signatur (AuthR') enthält, und zwar durch Ausführen des zweiten Algorithmus (A2) unter Verwendung des ersten Geheimnisses (Pw) und von zu signierenden Daten, die entsprechend der dritten Signatur (AuthR) aus dem gleichem dritten Nachrichtenteil der Nachricht (M1) und dem gleichem vierten Nachrichtenteil der Nachricht (M2) zusammengesetzt werden, wie bei der Erzeugung der dritten Signatur (AuthR), und
Vergleichen des von der zweiten Netzwerkeinrichtung erzeugten, die dritte Signatur (AuthR) enthaltenen Datensatzes mit dem von der ersten Netzwerkeinrichtung erzeugten, die vierte Signatur (AuthR') enthaltenen Datensatzes;
g) Erzeugung von jeweils einem zweiten Geheimnis (G) auf der ersten Netzwerkeinrichtung und auf der zweiten Netzwerkeinrichtung, und zwar jeweils durch Ausführen eines dritten Algorithmus (A3) unter Verwendung des ersten Geheimnisses (Pw) und zumindest einem der zuvor in den Schritten a), b), c), d), e), f) erzeugten Datensätze;
h) Verwenden des zweiten gemeinsamen Geheimnisses (G) durch die erste Netzwerkeinrichtung und die zweite Netzwerkeinrichtung als gemeinsamer Schlüssel für eine sichere Kommunikation zwischen der ersten Netzwerkeinrichtung und der zweiten Netzwerkeinrichtung.

2. Verfahren nach Anspruch 1, wobei bei Schritt g) auf der ersten und der zweiten Netzwerkeinrichtung jeweils nur auf erzeugte Datensätze mit jeweils gleichen Daten zurückgegriffen wird, insbesondere jeweils auf wenigstens einen der Datensätze, welche wenigstens eine Zufallszahl (Ni, Nr) enthalten und/oder auf wenigstens einen der Datensätze, welche die erste, dritte oder vierte Signatur enthalten sowie auf wenigstens einen der Datensätze, welche die erste, zweite oder dritte Signatur enthalten.

3. Verfahren nach Anspruch 1 oder 2, **dadurch gekennzeichnet, dass**
- nach Schritt a) von der zweiten Netzwerkeinrichtung zunächst eine Prüfung der von der ersten Netzwerkeinrichtung übersandten Identitätskennung (IDi) durchgeführt wird und basierend auf dem Ergebnis der Prüfung von der zweiten Netzwerkeinrichtung entschieden wird, ob Schritt b) eingeleitet wird oder das Verfahren nach Schritt a) abgebrochen wird,
- nach Schritt b) von der ersten Netzwerkeinrichtung zunächst eine Prüfung der von der zweiten Netzwerkeinrichtung übersandten Identitätskennung (IDr) durchgeführt wird und basierend auf dem Ergebnis der Prüfung von der ersten Netzwerkeinrichtung entschieden wird, ob Schritt c) eingeleitet wird oder das Verfahren nach Schritt b) abgebrochen wird,
- nach Schritt d) von der zweiten Netzwerkeinrichtung unter Ansprechen auf das Ergebnis des Vergleichens der ersten Signatur mit der zweiten Signatur entschieden wird, ob Schritt e) eingeleitet wird oder das Verfahren nach Schritt d) abgebrochen wird, und/oder
- nach Schritt f) von der ersten Netzwerkeinrichtung unter Ansprechen auf das Ergebnis des Vergleichens der dritten Signatur mit der vierten Signatur entschieden wird, ob Schritt g) eingeleitet wird oder das Verfahren nach Schritt f) abgebrochen wird.

4. Verfahren nach einem der vorstehenden Ansprüche 1 bis 3, **dadurch gekennzeichnet,**
**dass** das erste Geheimnis (Pw) auf der ersten Netzwerkeinrichtung sowie auf der zweiten Netzwerkeinrichtung gespeichert oder über eine Eingabeschnittstelle eingeben wird, und zwar jeweils vor jedem Ausführen des Schritts a) oder für eine mehrmalige Ausführung des Schritts a), wobei bei der Verwendung des ersten Geheimnisses (Pw) auf beiden Netzwerkeinrichtungen entweder direkt das erste Geheimnis (Pw) eingesetzt wird oder ein aus dem ersten Geheimnis (Pw) identisch abgeleiteter Wert, insbesondere indem für oder durch die beiden Netzwerkeinrichtungen jeweils ein identisches Ableitungsverfahren durchgeführt wird.

5. Verfahren nach einem der vorstehenden Ansprüche 1 bis 3, **dadurch gekennzeichnet, dass** auf einer der beiden Netzwerkeinrichtungen das erste Geheimnis (Pw) und auf der anderen der beiden Netzwerkeinrichtungen ein basierend auf dem ersten Geheimnis (Pw) abgeleiteter Wert gespeichert oder über eine Eingabeschnittstelle eingeben wird, und zwar jeweils vor jedem Ausführen des Schritts a) oder für eine mehrmalige Ausführung des Schritts a), wobei bei der Verwendung des ersten Geheimnisses (Pw) auf beiden Netzwerkeinrichtungen ein, basierend auf dem ersten Geheimnis (Pw) identisch abgeleiteter Wert eingesetzt wird.

6. Verfahren nach einem der vorstehenden Ansprüche 1 bis 5, **dadurch gekennzeichnet, dass**
- die erste Nachricht (M1) zusätzlich einen Parametersatz (Pi) enthält, der den ersten Algorithmus (A1), den zweiten Algorithmus (A2), den dritten Algorithmus (A3), eine Vorschrift zur Ableitung eines auf dem ersten Geheimnis (Pw) basierenden Wertes, eine Identifizierung von jeweiligen Nachrichtenteilen zur Erzeugung von Signaturen und/oder eine Identitätskennung der zweiten Netzwerkeinrichtung umfasst und/oder
- die zweite Nachricht (M2) zusätzlich einen Parametersatz (Pr) enthält, der den ersten Algorithmus (A1), den zweiten Algorithmus (A2), den dritten Algorithmus (A3), eine Identifizierung von jeweiligen Nachrichtenteilen zur Erzeugung von Signaturen und/oder eine Vorschrift zur Ableitung eines auf dem ersten Geheimnis (Pw) basierenden Wertes umfasst.

7. Verfahren nach einem der vorstehenden Ansprüche 1 bis 6, **dadurch gekennzeichnet, dass** der erste oder dritte Nachrichtenteil der ersten Nachricht (M1) ohne Verwendung der die in dieser Nachricht enthaltene Zufallszahl (Ni) gebildet wird und/oder
der zweite oder vierte Nachrichtenteil der zweiten Nachricht (M2) ohne Verwendung der in dieser Nachricht enthaltenen Zufallszahl (Nr) gebildet wird.

8. Verfahren nach einem der vorstehenden Ansprüche 1 bis 7, **dadurch gekennzeichnet, dass** die Schritte a) bis h) bei einer bereits vorhandenen Kommunikationsbeziehung zwischen der ersten Netzwerkeinrichtung und der zweiten Netzwerkeinrichtung durchgeführt werden, um diese bereits vorhandene Kommunikationsbeziehung nachträglich abzusichern.

9. Computerprogrammprodukt, welches die Durchführung des Verfahrens nach einem der vorstehenden Ansprüche veranlasst.

10. Anordnung mit einer ersten Netzwerkeinrichtung und einer zweiten Netzwerkeinrichtung in einem Kommunikationsnetzwerk, insbesondere zur Durchführung eines Verfahrens nach einem der Ansprüche 1 bis 8, wobei auf der ersten Netzwerkeinrichtung ein erstes Verarbeitungsmittel (V1), ein erstes Kommunikationsmittel (K1) und ein erstes sicheres Kommunikationsmittel (sK1) vorgesehen sind und auf der zweiten Netzwerkeinrichtung ein zweites Verarbeitungsmittel (V2), ein zweites Kommunikationsmittel (K2) und ein zweites sicheres Kommunikationsmittel (sK2) vorgesehen sind;
**dadurch gekennzeichnet, dass**
a) das erste Verarbeitungsmittel (V1) eingerichtet ist, zum Erzeugen eines Datensatzes, der wenigstens eine Zufallszahl (Ni) enthält, und
das erste Kommunikationsmittel (K1) eingerichtet ist zum Senden einer ersten Nachricht (M1), enthaltend eine Identitätskennung (IDi) der ersten Netzwerkeinrichtung und diesen von der ersten Netzwerkeinrichtung erzeugten Datensatz, von der ersten Netzwerkeinrichtung an die zweite Netzwerkeinrichtung;
b) das zweite Verarbeitungsmittel (V2) eingerichtet ist, zum Erzeugen eines Datensatzes, der wenigstens eine Zufallszahl (Nr) enthält, und
das zweite Kommunikationsmittel (K2) eingerichtet ist, zum Senden einer zweiten Nachricht (M2), enthaltend eine Identitätskennung (IDr) der zweiten Netzwerkeinrichtung und diesen von der zweiten Netzwerkeinrichtung erzeugten Datensatz, von der zweiten Netzwerkeinrichtung an die erste Netzwerkeinrichtung;
c) das erste Verarbeitungsmittel (V1) ferner eingerichtet ist, zum Ausführen eines ersten Algorithmus (A1) auf der ersten Netzwerkeinrichtung zum Erzeugen eines Datensatzes, der eine erste Signatur (Authl) enthält, unter Verwendung eines ersten Geheimnisses (Pw) und von zu signierenden Daten, wobei das erste Verarbeitungsmittel (V1) eingerichtet ist, diese zu signierenden Daten aus einem ersten Nachrichtenteil der ersten Nachricht (M1) und einem zweiten Nachrichtenteil der zweiten Nachricht (M2) zusammenzusetzen und wobei das erste Kommunikationsmittel (K1) ferner eingerichtet ist, zum Senden einer dritten Nachricht (M3), enthaltend diesen erzeugten Datensatz, von der ersten Netzwerkeinrichtung an die zweite Netzwerkeinrichtung;
d) das zweite Verarbeitungsmittel (V2) ferner eingerichtet ist, zum Ausführen des ersten Algorithmus (A1) auf der zweiten Netzwerkeinrichtung zum Erzeugen eines Datensatzes, der eine zweite Signatur (Authl') enthält, unter Verwendung des ersten Geheimnisses (Pw) und von zu signierenden Daten, wobei das zweite Verarbeitungsmittel (V2) eingerichtet ist, diese zu signierenden Daten aus dem gleichem ersten Nachrichtenteil der ersten Nachricht (M1) und dem gleichem zweiten Nachrichtenteil der zweiten Nachricht (M2) zusammenzusetzen, wie das erste Verarbeitungsmittel (V1) bei der Erzeugung des die erste Signatur (Authl) enthaltenen Datensatzes, und wobei das zweite Verarbeitungsmittel (V2) eingerichtet ist, zum Vergleichen des von der ersten Netzwerkeinrichtung erzeugten, die erste Signatur (Authl) enthaltenen Datensatzes mit dem von der zweiten Netzwerkeinrichtung erzeugten, die zweite Signatur (Authl') enthaltenen Datensatzes;
e) das zweite Verarbeitungsmittel (V2) ferner eingerichtet ist, zum Ausführen eines zweiten Algorithmus (A2) zum Erzeugen eines Datensatzes, der eine dritte Signatur (AuthR) enthält, unter Verwendung des ersten Geheimnisses (Pw) und von zu signierenden Daten, wobei das zweite Verarbeitungsmittel (V2) eingerichtet ist, diese zu signierenden Daten aus einem dritten Nachrichtenteil der ersten Nachricht (M1) und einem vierten Nachrichtenteil der zweiten Nachricht (M2) zusammenzusetzen, wobei der dritte Nachrichtenteil ein anderer Nachrichtenteil als der erste Nachrichtenteil und/oder der vierte Nachrichtenteil ein anderer Nachrichtenteil als der zweite Nachrichtenteil ist, und wobei das zweite Kommunikationsmittel (K2) ferner eingerichtet ist, zum Senden einer vierten Nachricht (M4), enthaltend diesen erzeugten Datensatz, von der zweiten Netzwerkeinrichtung an die erste Netzwerkeinrichtung;
f) das erste Verarbeitungsmittel (V1) ferner eingerichtet ist, zum Ausführen des zweiten Algorithmus (A2) auf der ersten Netzwerkeinrichtung zum Erzeugen eines Datensatzes, der eine vierte Signatur (AuthR') enthält, unter Verwendung des ersten Geheimnisses (Pw) und von zu signierenden Daten, wobei das erste Verarbeitungsmittel (V1) eingerichtet ist, diese zu signierenden Daten entsprechend der dritten Signatur (AuthR) aus dem gleichem dritten Nachrichtenteil der Nachricht (M1) und dem gleichem vierten Nachrichtenteil der Nachricht (M2) zusammenzusetzen, wie das zweite Verarbeitungsmittel (V2) bei der Erzeugung des die dritte Signatur (AuthR) enthaltenen Datensatzes, und wobei das erste Verarbeitungsmittel (V1) eingerichtet ist, zum Vergleichen des von der zweiten Netzwerkeinrichtung erzeugten, die dritte Signatur (AuthR) enthaltenen Datensatzes mit dem von der ersten Netzwerkeinrichtung erzeugten, die vierte Signatur (AuthR') enthaltenen Datensatz;
g) die ersten und zweiten Verarbeitungsmittel (V1, V2) ferner eingerichtet sind, zum Ausführen eines dritten Algorithmus (A3), zum jeweiligen Erzeugen von einem gemeinsamen zweiten Geheimnis (G) unter Verwendung des ersten Geheimnisses (Pw) und zumindest einem der Datensätze, die die Zufallszahl (Ni), die Zufallszahl (Nr), erste Signatur (Authl), die zweite Signatur (Authl'), die dritte Signatur (AuthR) oder die vierte Signatur (AuthR') enthalten;
h) die ersten und zweiten sicheren Kommunikationsmittel (sK1, sK2) eingerichtet sind, zum Verwenden des gemeinsamen zweiten Geheimnisses (G) als gemeinsamen Schlüssel für eine sichere Kommunikation zwischen der ersten Netzwerkeinrichtung und der zweiten Netzwerkeinrichtung.

## Claims

1. A method for establishing a secure communication between a first network device (initiator) and a second network device (responder) in a communication network, wherein a symmetric cryptosystem is used, so that each of the two network devices uses the same secrets as keys for encryption and decryption of data sets, for performing a separate authentication with respect to the first and second network devices before generating a secret to be used as a shared key for the secure communication; **characterised by** comprising the steps of:
a) generating, on the first network device, a data set containing at least one random number (Ni); and
transmitting a first message (M1) containing an identifier (IDi) of the first network device and said generated data set from the first network device to the second network device;
b) generating, on the second network device, a data set containing at least one random number (Nr); and transmitting a second message (M2) containing an identifier (IDr) of the second network device and said generated data set from the second network device to the first network device;
c) generating, on the first network device, a data set containing a first signature (Authl) by executing a first algorithm (A1) using a first secret (Pw) and data to be signed, which are composed of a first message part of the first message (M1) and a second message part of the second message (M2); and
transmitting a third message (M3) containing said generated data set from the first network device to the second network device;
d) generating, on the second network device, a data set containing a second signature (Authl') by executing the first algorithm (A1) using the first secret (Pw) and data to be signed, which are composed of the same first message part of the first message (M1) and the same second message part of the second message (M2) as for the generation of the data set containing the first signature (Authl); and
comparing the data set generated by the first network device and containing the first signature (Authl) with the data set generated by the second network device and containing the second signature (Authl');
e) generating, on the second network device, a data set containing a third signature (AuthR) by executing a second algorithm (A2) using the first secret (Pw) and data to be signed, which are composed of a third message part of the first message (M1) and a fourth message part of the second message (M2), wherein the third message part is a message part other than the first message part and/or wherein the fourth message part is a message part other than the second message part; and
transmitting a fourth message (M4) containing said generated data set from the second network device to the first network device;
f) generating, on the first network device, a data set containing a fourth signature (AuthR') by executing the second algorithm (A2) using the first secret (Pw) and data to be signed, which are composed in correspondence to the third signature (AuthR), of the same third message part of the first message (M1) and the same fourth message part of the second message (M2) as for the generation of the third signature (AuthR); and
comparing the data set generated by the second network device and containing the third signature (AuthR) with the data set generated by the first network device and containing the fourth signature (AuthR');
g) generating a respective second secret (G) on the first network device and on the second network device, in each case by executing a third algorithm (A3) and by using the first secret (Pw) and at least one of the data sets previously generated in steps a), b), c), d), e), f);
h) using the second shared secret (G) by the first network device and the second network device as a shared key for a secure communication between the first network device and the second network device.

2. The method according to claim 1, wherein in step g) the first and second network devices only use generated data sets including the same data in each case, in particular at least one of the data sets containing at least one random number (Ni, Nr), and/or at least one of the data sets containing the first, third, or fourth signature, and at least one of the data sets containing the first, second, or third signature.

3. The method according to claim 1 or 2, **characterised in that**
- after step a), the second network device first verifies the identifier (IDi) transmitted by the first network device, and based on the result of the verification, the second network device decides whether step b) is initiated or the method is aborted after step a);
- after step b), the first network device first verifies the identifier (IDr) transmitted by the second network device, and based on the result of the verification, the first network device decides whether step c) is initiated or the method is aborted after step b);
- after step d), the second network device is responsive to the result of the comparison of the first signature with the second signature to decide whether step e) is initiated or the method is aborted after step d); and/or
- after step f), the first network device is responsive to the result of the comparison of the third signature with the fourth signature to decide whether step g) is initiated or the method is aborted after step f).

4. The method according to any one of the preceding claims 1 to 3, **characterised in that**
the first secret (Pw) is stored on the first network device and on the second network device or is entered via an input interface, in each case before step a) is performed, or for performing step a) repeatedly, wherein when the first secret (Pw) is used on both network devices, either the first secret (Pw) is employed directly, or a value is employed that has been derived from the first secret (Pw) in identical manner, in particular by performing an identical derivation procedure for or by the two network devices.

5. The method according to any one of the preceding claims 1 to 3, **characterised in that**
the first secret (Pw) is stored on one of the two network devices, and a value derived on the basis of the first secret (Pw) is stored on the other one of the two network devices or is entered via an input interface, in each case before step a) is performed, or for performing step a) repeatedly, wherein when the first secret (Pw) is used on both network devices, a value is employed that has been derived on the basis of the first secret (Pw) in identical manner.

6. The method according to any one of the preceding claims 1 to 5, **characterised in that**
- the first message (M1) additionally contains a parameter set (Pi) comprising the first algorithm (A1), the second algorithm (A2), the third algorithm (A3), a rule for deriving a value based on the first secret (Pw), an identification of respective message parts for generating signatures, and/or an identifier of the second network device; and/or
- the second message (M2) additionally contains a parameter set (Pr) comprising the first algorithm (A1), the second algorithm (A2), the third algorithm (A3), an identification of respective message parts for generating signatures, and/or a rule for deriving a value based on the first secret (Pw).

7. The method according to any one of the preceding claims 1 to 6, **characterised in that** the first or the third message part of the first message (M1) is formed without using the random number (Ni) contained in this message; and/or
the second or the fourth message part of the second message (M2) is formed without using the random number (Nr) contained in this message.

8. The method according to any one of the preceding claims 1 to 7, **characterised in that** steps a) to h) are performed while a communication relationship is already existing between the first network device and the second network device in order to subsequently secure this existing communication relationship.

9. A computer program product which causes the execution of the method according to any one of the preceding claims.

10. An arrangement comprising a first network device and a second network device in a communication network, in particular for carrying out a method according to any one of claims 1 to 8, the first network-device comprising a first processing means (V1), a first communication means (K1), and a first secure communication means (sK1), and the second network device comprising a second processing means (V2), a second communication means (K2), and a second secure communication means (sK2); **characterised in that**
a) the first processing means (V1) is adapted to generate a data set containing at least one random number (Ni); and
the first communication means (K1) is adapted to transmit, from the first network device to the second network device, a first message (M1) containing an identifier (IDi) of the first network device and said data set generated by the first network device;
b) the second processing means (V2) is adapted to generate a data set containing at least one random number (Nr); and
the second communication means (K2) is adapted to transmit, from the second network device to the first network device, a second message (M2) containing an identifier (IDr) of the second network device and said data set generated by the second network device;
c) the first processing means (V1) is further adapted to execute a first algorithm (A1) on the first network device to generate a data set containing a first signature (Authl), using a first secret (Pw) and data to be signed, wherein the first processing means (V1) is adapted to compose said data to be signed from a first message part of the first message (M1) and a second message part of the second message (M2), and wherein the first communication means (K1) is further adapted to transmit a third message (M3) containing said generated data set from the first network device to the second network device;
d) the second processing means (V2) is further adapted to execute the first algorithm (A1) on the second network device in order to generate a data set containing a second signature (AuthI') using the first secret (Pw) and data to be signed, wherein the second processing means (V2) is adapted to compose said data to be signed from the same first message part of the first message (M1) and the same second message part of the second message (M2) as the first processing means (V1) when generating the data set containing the first signature (AuthI), and wherein the second processing means (V2) is adapted to compare the data set generated by the first network device and containing the first signature (Authl) with the data set generated by the second network device and containing the second signature (AuthI');
e) the second processing means (V2) is further adapted to execute a second algorithm (A2) for generating a data set containing a third signature (AuthR) using the first secret (Pw) and data to be signed, wherein the second processing means (V2) is adapted to compose said data to be signed from a third message part of the first message (M1) and a fourth message part of the second message (M2), wherein the third message part is a message part other than the first message part and/or the fourth message part is a message part other than the second message part, and wherein the second communication means (K2) is further adapted to transmit a fourth message (M4) containing said generated data set from the second network device to the first network device;
f) the first processing means (V1) is further adapted to execute the second algorithm (A2) on the first network device for generating a data set containing a fourth signature (AuthR') using the first secret (Pw) and data to be signed, wherein the first processing means (V1) is adapted to compose said data to be signed in correspondence to the third signature (AuthR) from the same third message part of the first message (M1) and the same fourth message part of the second message (M2) as the second processing means (V2) when generating the data set containing the third signature (AuthR), and wherein the first processing means (V1) is adapted to compare the data set generated by the second network device and containing the third signature (AuthR) with the data set generated by the first network device and containing the fourth signature (AuthR');
g) the first and second processing means (V1, V2) are further adapted to execute a third algorithm (A3) for respectively generating a shared second secret (G) using the first secret (Pw) and at least one of the data sets containing the random number (Ni), the random number (Nr), the first signature (AuthI), the second signature (AuthI'), the third signature (AuthR), or the fourth signature (AuthR');
h) the first and second secure communication means (sK1, sK2) are adapted to use the shared second secret (G) as a shared key for a secure communication between the first network device and the second network device.

## Revendications

1. Procédé pour l'établissement d'une communication sécurisée entre un premier dispositif de réseau (initiateur) et un deuxième dispositif de réseau (répondeur) dans un réseau de communication, où, à l'aide d'un système de cryptographie symétrique dans lequel les deux dispositifs de réseau utilisent chacun les mêmes secrets sous la forme d'une clé pour le chiffrage et le déchiffrage d'ensembles de données, une authentification séparée concernant les premier et deuxième dispositifs de réseau est effectuée avant la génération d'un secret à utiliser comme une clé commune pour la communication sécurisée, **caractérisé en ce que** les étapes suivantes sont incluses :
a) génération, sur le premier dispositif de réseau, d'un ensemble de données qui contient au moins un nombre aléatoire (Ni) et
envoi d'un premier message (M1) contenant un identifiant d'identité (IDi) du premier dispositif de réseau et cet ensemble de données généré, du premier dispositif de réseau au deuxième dispositif de réseau ;
b) génération, sur le deuxième dispositif de réseau, d'un ensemble de données qui contient au moins un nombre aléatoire (Nr) et
envoi d'un deuxième message (M2) contenant un identifiant d'identité (IDr) du deuxième dispositif de réseau et cet ensemble de données généré, du deuxième dispositif de réseau au premier dispositif de réseau ;
c) génération, sur le premier dispositif de réseau, d'un ensemble de données qui contient une première signature (AuthI), grâce à l'exécution d'un premier algorithme (A1) en utilisant un premier secret (Pw), et des données à signer, qui sont constituées d'une première partie de message du premier message (M1) et d'une deuxième partie de message du deuxième message (M2), et
envoi d'un troisième message (M3) contenant cet ensemble de données généré, du premier dispositif de réseau au deuxième dispositif de réseau ;
d) génération, sur le deuxième dispositif de réseau, d'un ensemble de données qui contient une deuxième signature (AuthI'), grâce à l'exécution du premier algorithme (A1) en utilisant le premier secret (Pw), et des données à signer, qui sont constituées de la même première partie de message du premier message (M1) et de la même deuxième partie de message du deuxième message (M2) que pour la génération de l'ensemble de données contenant la première signature (AuthI),
et comparaison de l'ensemble de données généré par le premier dispositif de réseau, contenant la première signature (AuthI), avec l'ensemble de données généré par le deuxième dispositif de réseau, contenant la deuxième signature (AuthI') ;
e) génération, sur le deuxième dispositif de réseau, d'un ensemble de données qui contient une troisième signature (AuthR), grâce à l'exécution d'un deuxième algorithme (A2) en utilisant le premier secret (Pw), et des données à signer, qui sont constituées d'une troisième partie de message du premier message (M1) et d'une quatrième partie de message du deuxième message (M2), où la troisième partie de message est une partie de message différente de la première partie de message et/ou la quatrième partie de message est différente de la deuxième partie de message et
envoi d'un quatrième message (M4) contenant cet ensemble de données généré, du deuxième dispositif de réseau au premier dispositif de réseau ;
f) génération, sur le premier dispositif de réseau, d'un ensemble de données qui contient une quatrième signature (AuthR'), grâce à l'exécution du deuxième algorithme (A2) en utilisant le premier secret (Pw), et des données à signer, qui sont constituées, en fonction de la troisième signature (AuthR), de la même troisième partie de message du message (M1) et de la même quatrième partie de message du message (M2) que lors de la génération de la troisième signature (AuthR) et
comparaison de l'ensemble de données généré par le deuxième dispositif de réseau, contenant la troisième signature (AuthR), avec l'ensemble de données généré par le premier dispositif de réseau, contenant la quatrième signature (AuthR') ;
g) génération d'un deuxième secret (G) respectivement sur le premier dispositif de réseau et sur le deuxième dispositif de réseau, respectivement grâce à l'exécution d'un troisième algorithme (A3), en utilisant le premier secret (Pw), et d'au moins un des ensembles de données générés auparavant aux étapes a), b), c), d), e), f) ;
h) utilisation du deuxième secret commun (G) par le premier dispositif de réseau et le deuxième dispositif de réseau en tant que clé commune pour une communication sécurisée entre le premier dispositif de réseau et le deuxième dispositif de réseau.

2. Procédé selon la revendication 1, où, à l'étape g), sur les premier et deuxième dispositifs de réseau, sont utilisés respectivement uniquement les ensembles de données générés avec respectivement les mêmes données, en particulier respectivement au moins un des ensembles de données qui contiennent au moins un nombre aléatoire (Ni, Nr) et/ou au moins un des ensembles de données qui contiennent la première, troisième ou quatrième signature ainsi qu'au moins un des ensembles de données qui contiennent la première, deuxième ou troisième signature.

3. Procédé selon la revendication 1 ou 2, **caractérisé en ce que**
- après l'étape a), le deuxième dispositif de réseau effectue d'abord une vérification de l'identifiant d'identité (IDi) envoyé par le premier dispositif de réseau et, sur la base du résultat de la vérification, le deuxième dispositif de réseau décide si l'étape b) est initiée ou si le procédé est interrompu après l'étape a),
- après l'étape b), le premier dispositif de réseau effectue d'abord une vérification de l'identifiant d'identité (IDr) envoyé par le deuxième dispositif de réseau et, sur la base du résultat de la vérification, le premier dispositif de réseau décide si l'étape c) est initiée ou si le procédé est interrompu après l'étape b),
- après l'étape d), le deuxième dispositif de réseau, en réaction au résultat de la comparaison de la première signature avec la deuxième signature, décide si l'étape e) est initiée ou si le procédé est interrompu après l'étape d) et/ou
- après l'étape f), le premier dispositif de réseau, en réaction au résultat de la comparaison de la troisième signature avec la quatrième signature, décide si l'étape g) est initiée ou si le procédé est interrompu après l'étape f).

4. Procédé selon l'une des revendications précédentes 1 à 3, **caractérisé en ce que**
le premier secret (Pw) est enregistré sur le premier dispositif de réseau ainsi que sur le deuxième dispositif de réseau ou est entré par l'intermédiaire d'une interface d'entrée, respectivement avant chaque exécution de l'étape a) ou pour une exécution unique de l'étape a), où, lors de l'utilisation du premier secret (Pw) sur les deux dispositifs de réseau, est utilisé soit le premier secret (Pw) directement soit une valeur dérivée, de manière identique, du premier secret (Pw), en particulier en effectuant respectivement, pour ou à l'aide des deux dispositifs de réseau, un procédé de dérivation identique.

5. Procédé selon l'une des revendications précédentes 1 à 3, **caractérisé en ce que**, sur un des deux dispositifs de réseau, est enregistré le premier secret (Pw) et sur l'autre des deux dispositifs de réseau est enregistrée une valeur dérivée à partir du premier secret (Pw) ou est entrée par l'intermédiaire d'une interface d'entrée, respectivement avant chaque exécution de l'étape a) ou pour une exécution unique de l'étape a), où, lors de l'utilisation du premier secret (Pw), sur les deux dispositifs de réseau, est utilisée une valeur dérivée de manière identique à partir du premier secret (Pw).

6. Procédé selon l'une des revendications précédentes 1 à 5, **caractérisé en ce que**
- le premier message (M1) contient en outre un ensemble de paramètres (Pi) qui comprend le premier algorithme (A1), le deuxième algorithme (A2), le troisième algorithme (A3), une instruction pour la dérivation d'une valeur à partir du premier secret (Pw), une identification de parties respectives de messages pour la génération de signatures et/ou un identifiant d'identité du deuxième dispositif de réseau et/ou
- le deuxième message (M2) contient en outre un ensemble de paramètres (Pr) qui comprend le premier algorithme (A1), le deuxième algorithme (A2), le troisième algorithme (A3), une identification de parties respectives de messages pour la génération de signatures et/ou une instruction pour la dérivation d'une valeur à partir du premier secret (Pw).

7. Procédé selon l'une des revendications précédentes 1 à 6, **caractérisé en ce que** la première ou la troisième partie de message du premier message (M1) est formée sans utiliser le nombre aléatoire (Ni) contenu dans ce message et/ou
la deuxième ou la quatrième partie de message du deuxième message (M2) est formée sans utiliser le nombre aléatoire (Nr) contenu dans ce message.

8. Procédé selon l'une des revendications précédentes 1 à 7, **caractérisé en ce que** les étapes a) à h) sont effectuées dans le cas d'une liaison de communication déjà existante entre le premier dispositif de réseau et le deuxième dispositif de réseau afin de sécuriser cette liaison de communication déjà existante de manière rétroactive.

9. Produit de programme informatique qui permet l'exécution du procédé selon l'une des revendications précédentes.

10. Disposition avec un premier dispositif de réseau et un deuxième dispositif de réseau dans un réseau de communication, en particulier pour l'exécution d'un procédé selon l'une des revendications 1 à 8, où, sur le premier dispositif de réseau, sont prévus un premier moyen de traitement (V1), un premier moyen de communication (K1) et un premier moyen de communication sécurisé (sK1), et, sur le deuxième dispositif de réseau sont prévus un deuxième moyen de traitement (V2), un deuxième moyen de communication (K2) et un deuxième moyen de communication sécurisé (sK2) ;
**caractérisé en ce que**
a) le premier moyen de traitement (V1) est conçu pour la génération d'un ensemble de données qui contient au moins un nombre aléatoire (Ni), et
le premier moyen de communication (K1) est conçu pour l'envoi d'un premier message (M1) contenant un identifiant d'identité (IDi) du premier dispositif de réseau et cet ensemble de données généré par le premier dispositif de réseau, du premier dispositif de réseau au deuxième dispositif de réseau ;
b) le deuxième moyen de traitement (V2) est conçu pour la génération d'un ensemble de données qui contient au moins un nombre aléatoire (Nr), et
le deuxième moyen de communication (K2) est conçu pour l'envoi d'un deuxième message (M2) contenant un identifiant d'identité (IDr) du deuxième dispositif de réseau et cet ensemble de données généré par le deuxième dispositif de réseau, du deuxième dispositif de réseau au premier dispositif de réseau ;
c) le premier moyen de traitement (V1) est en outre conçu pour l'exécution d'un premier algorithme (A1) sur le premier dispositif de réseau pour la génération d'un ensemble de données qui contient une première signature (AuthI), en utilisant un premier secret (Pw), et de données à signer, où le premier moyen de traitement (V1) est conçu pour constituer ces données à signer d'une première partie de message du premier message (M1) et d'une deuxième partie de message du deuxième message (M2) et où le premier moyen de communication (K1) est en outre conçu pour l'envoi d'un troisième message (M3) contenant cet ensemble de données généré, du premier dispositif de réseau au deuxième dispositif de réseau ;
d) le deuxième moyen de traitement (V2) est en outre conçu pour l'exécution du premier algorithme (A1) sur le deuxième dispositif de réseau pour la génération d'un ensemble de données qui contient une deuxième signature (AuthI), en utilisant le premier secret (Pw), et de données à signer, où le deuxième moyen de traitement (V2) est conçu pour constituer ces données à signer de la même première partie de message du premier message (M1) et de la même deuxième partie de message du deuxième message (M2) que le premier moyen de traite (V1) lors de la génération de l'ensemble de données contenant la première signature (AuthI), et où le deuxième moyen de traitement (V2) est conçu pour la comparaison de l'ensemble de données généré par le premier dispositif de réseau, contenant la première signature (AuthI) avec l'ensemble de données généré par le deuxième dispositif de réseau, contenant la deuxième signature (AuthI');
e) le deuxième moyen de traitement (V2) est en outre conçu pour l'exécution d'un deuxième algorithme (A2) pour la génération d'un ensemble de données qui contient une troisième signature (AuthR), en utilisant le premier secret (Pw), et de données à signer, où le deuxième moyen de traitement (V2) est conçu pour constituer ces données à signer d'une troisième partie de message du premier message (M1) et d'une quatrième partie de message du deuxième message (M2), où la troisième partie de message est une partie de message différente de la première partie de message et/ou la quatrième partie de message est une partie de message différente de la deuxième partie de message, et où le deuxième moyen de communication (K2) est en outre conçu pour l'envoi d'un quatrième message (M4) contenant cet ensemble de données généré du deuxième dispositif de réseau au premier dispositif de réseau ;
f) le premier moyen de traitement (V1) est en outre conçu pour l'exécution du deuxième algorithme (A2) sur le premier dispositif de réseau pour la génération d'un ensemble de données qui contient une quatrième signature (AuthR'), en utilisant le premier secret (Pw), et de données à signer, où le premier moyen de traitement (V1) est conçu pour constituer des données à signer, en fonction de la troisième signature (AuthR), à partir de la même troisième partie de message du message (M1) et de la même quatrième partie de message du message (M2) que le deuxième moyen de traitement (V2) lors de la génération de l'ensemble de données contenant la troisième signature (AuthR), et où le premier moyen de traitement (V1) est conçu pour la comparaison de l'ensemble de données généré par le deuxième dispositif de réseau et contenant la troisième signature (AuthR) avec l'ensemble de données généré par le premier dispositif de réseau et contenant la quatrième signature (AuthR') ;
g) les premier et deuxième moyens de traitement (V1, V2) sont en outre conçus pour l'exécution d'un troisième algorithme (A3) pour la génération respectivement d'un deuxième secret commun (G), en utilisant le premier secret (Pw) et au moins un des ensembles de données qui contiennent le nombre aléatoire (Ni), le nombre aléatoire (Nr), la première signature (AuthI), la deuxième signature (AuthI'), la troisième signature (AuthR) ou la quatrième signature (AuthR') ;
h) les premier et deuxième moyens de communication sécurisés (sK1, sK2) sont conçus pour l'utilisation du deuxième secret commun (G) en tant que clé commune pour une communication sécurisée entre le premier dispositif de réseau et le deuxième dispositif de réseau.
